# EUROPÄISCHE PATENTANMELDUNG

(11) **EP 3 505 523 A1**
(43) Veröffentlichungstag der Anmeldung: **03.07.2019**
(21) Anmeldenummer: 17211028.0
(22) Anmeldetag: 29.12.2017
(51) Int. Cl.: C07F 9/165, C08K 5/5398

(54) **NEUE KAUTSCHUKMISCHUNGEN**

(71) Anmelder: ARLANXEO Deutschland GmbH, 41540 Dormagen (DE)
(72) Erfinder: OBRECHT, Werner, 47447 Moers (DE); FRÜH, Thomas, 42115 Wuppertal (DE); BLAUL, Anke, 68723 Offersheim (DE)

(57) **Zusammenfassung**

Die Erfindung betrifft neue Kautschukmischungen, die mindestens einen doppelbindungshaltigen Kautschuk, und mindestens ein Dithiophosphorsäuresalz eines bi- oder polycyclischen Amins enthalten, deren Herstellung sowie ein Verfahren zur Vulkanisation dieser Kautschukmischungen und die dabei hergestellten Vulkanisate. Des Weiteren betrifft die vorliegende Erfindung Dithiophosphorsäuresalze von bi- oder polycyclischen Aminen sowie die Verwendung von Dithiophosphorsäuresalzen von bi- oder polycyclischen Aminen als Vulkanisationsbeschleuniger.

## Beschreibung

Die Erfindung betrifft neue Kautschukmischungen, die mindestens einen doppelbindungshaltigen Kautschuk, und mindestens ein Dithiophosphorsäuresalz eines bi- oder polycyclischen Amins enthalten, deren Herstellung sowie ein Verfahren zur Vulkanisation dieser Kautschukmischungen und die dabei hergestellten Vulkanisate. Des Weiteren betrifft die vorliegende Erfindung Dithiophosphorsäuresalze von bi- oder polycyclischen Aminen sowie die Verwendung von Dithiophosphorsäuresalzen von bi- oder polycyclischen Aminen als Vulkanisationsbeschleuniger.

In der Kautschukindustrie werden Guanidine wie Tetramethylguanidin, Tetraethylguanidin, Diphenylguanidin ("DPG"), Di-o-tolylguanidin ("DOTG") und o-Tolylbiguanidin für die Schwefelvulkanisation von Gummimischungen eingesetzt. Insbesondere Kombinationen der Guanidine mit üblichen Beschleunigern für die Schwefelvulkanisation wie z.B. Mercaptobeschleunigern, Sulfenamiden, Thiuramen und Dithocarbamaten sind bekannt.

Seit der Einführung des sogenannten "grünen Reifens" kommen Guanidine auch in silicahaltigen Kautschukmischungen zum Einsatz, die für Reifenlaufflächen mit niedrigem Rollwiderstand verwendet werden. Beschrieben wird dies beispielsweise in DE-OS 2447614, US-A-4,709,065, EP-A-0 299 074, DE-A-38 136 78, EP-A-0 501 227 sowie EP-A-0 447 066**.** Neben einem beschleunigenden Effekt auf die Vulkanisation wirken die Guanidine in derartigen silicahaltigen Kautschukmischungen auch als Katalysatoren für die Silanisierung der Kieselsäure.

Die zuvor genannten Guanidine kommen jedoch wegen ihrer Toxizität zunehmend in Verruf. So werden sie beispielsweise als allergieauslösend eingeschätzt (GUV-Informationen GUV-I 8559 (bisher GUV 50.0.11): "Theorie und Praxis der Prävention: Hautkrankheiten und Hautschutz"; Gesetzliche Unfallversicherung; Berufsgenossenschaft für Gesundheitsdienst und Wohlfahrtspflege) und sollen ersetzt werden. Weiterhin können Guanidine primäre aromatische Amine freisetzen und weisen im Falle des DOTG eine problematische Eigentoxizität auf.

Aus EP-A-0 943 657 ist eine vulkanisierbare Zusammensetzung auf Basis eines carboxylgruppenhaltigen Acrylat-Elastomers, insbesondere eines Copolymers aus einem aliphatischen ungesättigten Dicarbonsäuremonoalkylester und einem Acrylat bekannt. Diese Zusammensetzung enthält ein Mercaptobenzimidazol sowie als Vulkanisationssystem eine Kombination aus einem Diamin als Vernetzer und einem Vulkanisationsbeschleuniger. Bei letzterem kann es sich um ein Guanidin handeln oder aber anstelle des Guanidins um 1,8-Diazabicyclo[5.4.0]undec-7-en (DBU), 1,5-Diazabicyclo[4.3.0]non-5-en (DBN) oder deren Salze. Als geeignete Salze sind 5-Benzyl-1,5-diazabicyclo[4,3,0]-5-nonenium chloride und 5-Benzyl-1,5-diazabicyclo[4,3,0]-5-nonenium tetrafluoroborate erwähnt.

In EP-A-0 832 920 wird die Verwendung von Zinkdithiophosphaten in Kautschukmischungen beschrieben. Als Kautschuke können z.B. NR (natural rubber) sowie synthetische Kautschuke wie SBR (Styrol-Butadien Kautschuke), Polyisopren, BR (Polybutadienkautschuk), IR (Butylkautschuk), halogenierter Butylkautschuk sowie Ethyl-Propylen Kautschuk eingesetzt werden. Diese Kautschukmischungen werden für die Laufflächen pneumatischer Reifen mit guter Steuerbarkeit bei hohen Geschwindigkeiten eingesetzt. In den Beispielen von EP-A-0 832 920 liegt der Fokus auf SBR- bzw. NR-basierten Mischungen, in denen ausschließlich Russ als Füllstoff zum Einsatz gelangt und DPG als Vulkanisationsbeschleuniger in Mengen zwischen 0,2 und 0,5 phr zugesetzt wird.

Die **Aufgabe der vorliegenden Erfindung** bestand somit in der Bereitstellung neuer Kautschukmischungen insbesondere für Reifenanwendungen, die einerseits als Vulkanisationsbeschleuniger keine der zuvor genannten toxischen Guanidine enthalten, eine hohe Verarbeitungssicherheit aufweisen, aber trotzdem bei einer sich anschließenden Schwefelvulkanisation effizient sind und somit bei niedrigen (molaren) Mengen an Vernetzern eine hohe Vernetzungsdichte liefern und ferner zu Vulkanisaten mit einem attraktiven Eigenschaftsprofil führen.

**Gelöst** wird diese Aufgabe durch vulkanisierbare Kautschukmischungen enthaltend
a) mindestens einen doppelbindungshaltigen Kautschuk, und
b) mindestens ein Dithiophosphorsäuresalz eines bi- oder polycyclischen Amins.

Ein weiterer **Gegenstand der Erfindung** ist ein Verfahren zur Herstellung dieser Kautschukmischungen und ein Verfahren zur Vernetzung dieser Kautschukmischungen unter Herstellung der entsprechenden Vulkanisate. Ein weiterer **Gegenstand der Erfindung** besteht in den Vulkanisaten, insbesondere in Gestalt von Formteilen.

Weitere **Gegenstände der Erfindung** bestehen in der Bereitstellung von speziellen Dithiophosphorsäuresalzen von bi- oder polycyclischen Aminen und in der Verwendung dieser Dithiophosphorsäuresalze von bi- oder polycyclischen Aminen als Vulkanisationsbeschleuniger in Kautschukmischungen enthaltend mindestens einen doppelbindungshaltigen Kautschuk.

**Überraschenderweise** ist ein Zusatz der unerwünschten Guanidine wie DPG oder DOTG als Vulkanisationsbeschleuniger nicht mehr erforderlich, wenn in der vulkanisierbaren Kautschukmischung Dithiophosphorsäuresalze von bi- oder polycyclischen Aminen eingesetzt werden. Auch ohne DPG oder DOTG zeigen die erfindungsgemäßen Kautschukmischungen eine sehr gute Vulkanisationscharakteristik mit guter Vulkanisationsdichte und fuhren zu Vulkanisaten und Formkörpern mit sehr guten mechanischen und physikalischen Eigenschaften.

Darüber hinaus sind verglichen mit den bisherigen Vulkanisationsbeschleunigern wie DPG deutlich geringere Mengen der bi- oder polycyclischen Amine erforderlich, um eine vergleichbare Vulkanisationsdichte zu erhalten.

Sofern in der erfindungsgemäßen Mischung als zusätzliche Komponenten noch Kieselsäure und eine siliciumorganische Verbindung enthalten sind, wirken die Dithiophosphorsäuresalze der bi- oder polycyclischen Amine außerdem als Katalysator für die Silanisierung der Kieselsäure.

Optional enthalten die erfindungsgemäßen Kautschukmischungen noch
c) mindestens einen Füllstoff, und
d) mindestens ein Silan,
   und/oder
e) mindestens ein Mikrogel,
   und/oder
f) Schwefel und/oder mindestens einen Schwefelspender,
   und/oder
g) ein oder mehrere Kautschukadditive ungleich den Komponenten b) - f).

Bevorzugt enthalten die erfindungsgemäßen Kautschukmischungen keine Guanidine, ausgewählt aus der Gruppe bestehend aus Tetramethylguanidin, Tetraethylguanidin, Diphenylguanidin ("DPG"), Di-o-tolylguanidin ("DOTG") und o-Tolylbiguanidin. Besonders bevorzugt enthalten die erfindungsgemäßen Kautschukmischungen keinen Vernetzer, der zwei oder mehr Aminogruppen aufweist oder aber im Rahmen einer Vernetzung zwei oder mehr Aminogruppen in-situ freisetzen kann.

Die Mischungsbestandteile a) und b) sowie die optionalen weiteren Mischungsbestandteile c) bis g) werden nachfolgend im Detail erläutert.

### Komponente a): mindestens ein doppelbindungshaltiger Kautschuk

Doppelbindungshaltige Kautschuke sind im Sinne der vorliegenden Anmeldung ungesättigte Kautschuke, die über C=C Doppelbindungen in der Hauptkette verfügen. Bei diesen C=C doppelbindungshaltigen Kautschuken handelt es sich bevorzugt um solche auf Basis von Dienen. Besonders bevorzugt sind solche doppelbindungshaltigen Kautschuke, die praktisch keinen Gelanteil aufweisen und nach **DIN/ISO 1629** als "R"-Kautschuke bezeichnet werden.

Geeignete Kautschuke sind beispielsweise die Folgenden, die dem Fachmann hinreichend bekannt und von den unterschiedlichsten Anbietern käuflich erhältlich sind:
- NR: Naturkautschuk
- EPDM: Ethylen-Propylen-Dien Kautschuke
- SBR: Vinylaromat/Dien-Kautschuke,
- BR: Polybutadienkautschuk
- IR: Polyisopren
- SIBR: Styrol/Isopren/Butadien-Kautschuk
- BIR: Butadien/Isopren-Kautschuk
- IIR: Butylkautschuk (Isobuten/Isopren-Kautschuk)
- XIIR: Halobutylkautschuk, insbesondere Chlor- oder Brombutylkautschuk
- NBR: Nitrilkautschuk
- XNBR: carboxylierter Butadien/Acrylnitril-Kautschuk
- SNBR: Styrol/Butadien/Acrylnitril-Kautschuk
- XSBR: carboxylierter Styrol/Butadien-Kautschuk
- CR: Polychloropren
- ENR: epoxydierter Naturkautschuk

Bevorzugt werden in der erfindungsgemäßen Kautschukmischung NR (Naturkautschuk), SBR (Vinylaromat/Dien-Kautschuke), BR (Polybutadienkautschuk), IR (Polyisopren), IBR (Isopren/ Butadien-Kautschuk), IIR (Isobuten/Isopren-Kautschuk), BIR (Butadien/Isopren-Kautschuk) und SIBR (Styrol/Isopren-Kautschuk) oder Mischungen daraus eingesetzt. Die nachfolgenden Erläuterungen sollen nur einige Kautschuke davon illustrieren, den Umfang der Erfindung jedoch nicht beschränken.

### EPDM:

Als Kautschuke können in der Komponente a) der erfindungsgemäßen Mischung ein oder mehrere EPDM Kautschuke enthalten sein.

Hierbei handelt es sich um Polymere, die durch Terpolymerisation von Ethylen und größeren Anteilen Propylen sowie einigen Gew.-% eines dritten Monomeren mit Dien-Struktur hergestellt werden. Das Dien-Monomer stellt dabei die Doppelbindungen für die sich anschließende Vulkanisation bereit. Als Dien-Monomere finden vorwiegend cis,cis-1,5-Cyclooctadien (COD), exo-Dicyclopentadien (DCP), endo-Dicyclopentadien (EDCP), 1,4-Hexadien (HX), und auch 5-Ethyliden-2-norbornen (ENB) oder 5-Vinyl-2-norbornen (VNB) Verwendung.

EPDM Kautschuke, die im erfindungsgemäßen Sinn verwendet werden können, sind käuflich erhältlich, z.B. als Produkte aus der Produktreihe der Marke Buna EPG® und Buna EPT® der ARLANXEO Deutschland GmbH, oder aber nach dem Fachmann geläufigen Methoden herstellbar.

### SBR (Vinylaromat/Dien-Kautschuke):

Unter SBR-Kautschuken werden Kautschuke auf Basis von Vinylaromaten und Dienen verstanden und zwar sowohl Lösungs-SBR-Kautschuke, abgekürzt als "L-SBR", als auch Emulsions-SBR-Kautschuke, abgekürzt als "E-SBR".

Unter **L-SBR** versteht man Kautschuke, die in einem Lösungsprozess auf der Basis von Vinylaromaten und Dienen, bevorzugt konjugierten Dienen hergestellt werden (H. L. Hsieh, R. P. Quirk, Marcel Dekker Inc. New York-Basel 1996; I. Franta Elastomers and Rubber Compounding Materials; Elsevier 1989, Seite 73-74, 92-94; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 240-364). Geeignete vinylaromatische Monomere sind Styrol, o-, m- und p- Methylstyrol, technische Methylstyrolgemische, p-tert.-Butylstyrol, α-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt im Bereich von 5 bis 50 Gew.-%, besonders bevorzugt im Bereich von 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt im Bereich von 50 bis 95 Gew. %, bevorzugt im Bereich von 60 bis 90 Gew. %. Der Gehalt an Vinylgruppen im einpolymerisierten Dien liegt im Bereich von 10 bis 90 %, der Gehalt an 1,4-trans-ständigen Doppelbindungen liegt im Bereich von 20 bis 80 % und der Gehalt an 1,4-cis ständigen Doppelbindungen ist komplementär zur Summe aus Vinylgruppen und 1,4-trans-ständigen Doppelbindungen. Der Vinylgehalt des L-SBR beträgt vorzugsweise > 20 %.

Üblicherweise sind die polymerisierten Monomeren und die unterschiedlichen Dien-Konfigurationen statistisch im Polymeren verteilt. Auch Kautschuke mit blockartig aufgebauter Struktur, die als Integralkautschuk bezeichnet werden, sollen unter die Definition von L-SBR (A) fallen (K.-H. Nordsiek, K.-H. Kiepert, GAK Kautschuk Gummi Kunststoffe 33 (1980), no. 4, 251-255).

Unter **L-SBR** sollen sowohl lineare als auch verzweigte oder endgruppenmodifizierte Kautschuke verstanden werden. Beispielsweise sind derartige Typen in DE 2034989C2 und JP-A-56-104 906 genannt. Als Verzweigungsmittel wird bevorzugt Siliciumtetrachlorid bzw. Zinntetrachlorid eingesetzt.

Die Herstellung dieser Vinylaromat/Dien-Kautschuke als Kautschukkomponente a) für die erfindungsgemäßen Kautschukmischungen erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Dien-Kautschuke besitzen vorteilhafterweise Mooney-Viskositäten (ML 1+4 bei 100°C) im Bereich von 20 bis 150 Mooneyeinheiten, vorzugsweise im Bereich von 30 bis 100 Mooneyeinheiten. Insbesondere die hochmolekularen L-SBR-Typen mit Mooney-Viskositäten von > 80 ME können Öle in Mengen von 30 bis 100 Gew.-Teile bezogen auf 100 Gew.-Teile Kautschuk enthalten. Ölfreie L-SBR-Kautschuke weisen Glastemperaturen im Bereich von -80° bis +20° C auf, bestimmt durch Differentialthermoanalyse (DSC).

Unter **E-SBR** versteht man Kautschuke, die in einem Emulsionsprozess auf der Basis von Vinylaromaten und Dienen, bevorzugt konjugierten Dienen, und gegebenenfalls weiteren Monomeren hergestellt werden (Ullmann's Encyclopedia of Industrial Chemistry, Vol A 23, Rubber 3. Synthetic, VCH Verlagsgesellschaft mbH, D-69451 Weinheim, 1993, S. 247-251). Vinylaromaten sind Styrol, p-Methylstyrol und alpha-Methylstyrol. Diene sind insbesondere Butadien und Isopren. Weitere Monomere sind insbesondere Acrylnitril. Der Gehalt an einpolymerisiertem Vinylaromat liegt im Bereich von 10 bis 60 Gew. %. Die Glastemperatur liegt üblicherweise im Bereich von -50 °C bis +20°C (bestimmt mittels DSC) und die Mooney-Viskositäten (ML 1+4 bei 100°C) liegen im Bereich von 20 bis 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien E-SBR-Kautschuke weisen Glastemperaturen von -70° bis +20°C auf, bestimmt durch Differentialthermoanalyse (DSC).

Sowohl E-SBR als auch L-SBR können in den erfindungsgemäßen Kautschukmischungen auch in ölversteckter Form eingesetzt werden. Die Öle dienen als Weichmacher. Anwendung finden dabei dem Fachmann bekannte und industrieübliche Öle. Bevorzugt sind solche, die wenig bis keine polyaromatischen Kohlenwasserstoffe enthalten. Geeignet sind TDAE (Treated Distillate Aromatic Extract), MES (Mild Extraction Solvate) und naphthenische Öle.

### Polybutadien (BR):

Polybutadien (BR) umfasst insbesondere zwei unterschiedliche Polybutadien-Typklassen. Die erste Klasse weist einen 1,4-cis-Gehalt von mindestens 90 % auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt (Houben-Weyl, Methoden der Organischen Chemie, Thieme Verlag, Stuttgart, 1987, Band E 20, Seiten 798 bis 812; Ullmann's Encyclopedia of Industrial Chemistry, Vol A 23, Rubber 3. Synthetic, VCH Verlagsgesellschaft mbH, D-69451 Weinheim, 1993, S. 239-364). Die Glastemperatur dieses Polybutadiens liegt bevorzugt bei < -90°C (bestimmt mittels DSC).

Die zweite Polybutadien-Typklasse wird mit Li-Katalysatoren hergestellt und weist Vinylgehalte von 10% bis 90% auf. Die Glastemperaturen dieser Polybutadienkautschuke liegen im Bereich von -90°C bis +20 °C (bestimmt mittels DSC).

### Polyisopren (IR):

Polyisopren (IR) hat typischerweise einen 1,4-cis-Gehalt von mindestens 70%. Unter den Begriff IR fallen sowohl synthetisch hergestelltes 1,4-cis-Polyisopren als auch Naturkautschuk, (NR). Synthetisch wird IR sowohl mittels Lithium- als auch mit Hilfe von Ziegler/Natta-Katalysatoren hergestellt, vorzugsweise mit Titan- und Neodymkatalysatoren (Houben-Weyl, Methoden der Organischen Chemie, Thieme Verlag, Stuttgart, 1987, Band E 20, Seiten 822 bis 840; Ullmann's Encyclopedia of Industrial Chemistry, Vol. A 23, Rubber 3. Synthetic, VCH Verlagsgesellschaft mbH, D-69451 Weinheim, 1993, S. 239-364). Vorzugsweise wird Naturkautschuk eingesetzt. Auch 3,4-Polyisopren, das Glastemperaturen im Bereich von -30 bis +30 °C aufweist, fällt unter IR.

### Komponente b): mindestens ein Dithiophosphorsäuresalz eines bi- oder polycyclischen Amins

Dithiophosphorsäuresalze von bi- oder polycyclischen Aminen werden durch Umsetzung von Dithiophosphorsäure-Verbindungen mit bi- oder polycyclischen Aminen erhalten. Dithiophosphorsäure-Verbindungen sowie bi- oder polycyclischen Amine sind dem Fachmann prinzipiell bekannt und entweder käuflich erhältlich oder aber nach dem Fachmann bekannten Methoden herstellbar. Hierbei können alle dem Fachmann bekannten Dithiophosphorsäure-Verbindungen, bevorzugt Dithiophosphorsäureester, und beispielsweise aliphatische, gesättigte oder ungesättigte, bi- oder polycyclische Amine, bevorzugt aliphatische, gesättigte oder ungesättigte, bi- oder polycyclische tertiäre Amine eingesetzt werden. Insbesondere sind die folgenden Dithiophosphorsäure-Verbindungen der allgemeinen Formel (III) und bi- oder polycyclischen Amine der allgemeinen Formeln (IV-1) bzw. (IV-2) geeignet:
Dithiophosphorsäure-Verbindungen der allgemeinen Formel (III), 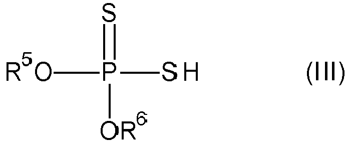 bi- oder polycyclische Amine (IV-1) bzw. (IV-2). 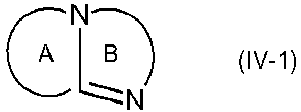 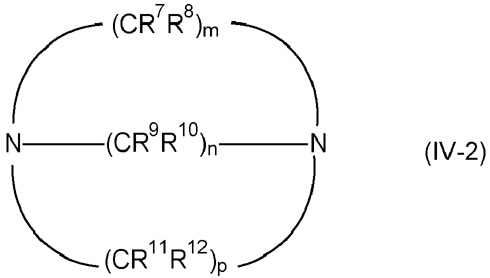 wobei Dithiophosphorsäuresalze von bi- oder polycyclischen Aminen der allgemeinen Formeln (I) bzw. (II) erhalten werden, 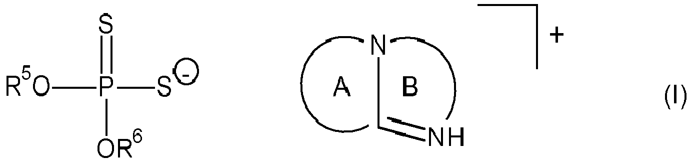 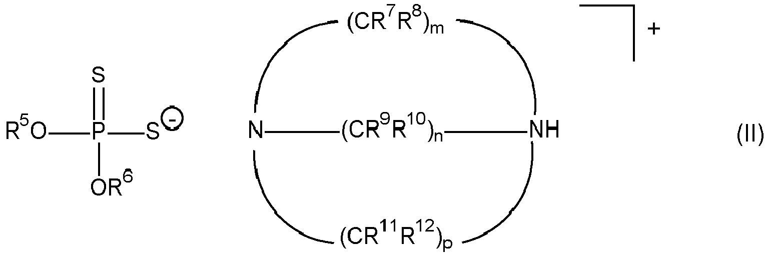
worin
- R⁵ und R⁶: gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen, bevorzugt aliphatische Reste mit 1 bis 24, bevorzugt 1 bis 18 Kohlenstoffatomen, und optional 1 bis 4 Heteroatomen, insbesondere N, S oder O, besonders bevorzugt Methyl, Ethyl, n-Propyl, Isopropyl, n-Butyl, sec.-Butyl, Isobutyl, tert.-Butyl, n-Pentyl, 2-Pentyl, 3-Pentyl, 2,2-Dimethylpropyl, 1,1,3,3-Tetramethylpentyl, n-Hexyl, 1-Methylhexyl, 1,1,3,3,5,5-Hexamethylhexyl, n-Heptyl, Isoheptyl, 1,1,3,3-Tetramethylbutyl, 1-Methylheptyl, 3-Methylheptyl, n-Octyl, 1,1,3,3-Tetramethylbutyl, 2-Ethylhexyl, n-Nonyl, Decyl, Undecyl, Dodecyl, Tridecyl, Tetradecyl, Pentadecyl, Hexadecyl, Heptadecyl oder Octadecyl, ganz besonders bevorzugt Methyl, Ethyl, n-Propyl, Isopropyl, n-Butyl, sec.-Butyl, Isobutyl, tert.-Butyl, n-Pentyl, 2-Pentyl, 3-Pentyl, 2,2-Dimethylpropyl, 1,1,3,3-Tetramethylpentyl, n-Hexyl, 1-Methylhexyl, 1,1,3,3,5,5-Hexamethylhexyl, n-Heptyl, Isoheptyl, 1,1,3,3-Tetramethylbutyl, 1-Methylheptyl, 3-Methylheptyl, n-Octyl, 1,1,3,3-Tetramethylbutyl oder 2-Ethylhexyl;
- A: für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten 5 bis 7 gliedrigen heterocyclischen Ring, der 1 oder 2 N-Atome aufweist;
- B: für einen aliphatischen unsubstituierten oder substituierten, gegebenenfalls eine Doppelbindung aufweisenden, 4 bis 8 gliedrigen heterocyclischen Ring steht, bevorzugt für einen unsubstituierten, eine Doppelbindung aufweisenden, 5 bis 6 gliedrigen heterocyclischen Ring, der 2 N-Atome aufweist;
- R⁷, R⁸, R⁹, R¹⁰, R¹¹ und R¹²: gleich oder verschieden sind und für H oder aliphatische Reste mit 1 bis 4 Kohlenstoffatomen stehen, bevorzugt H, Methyl, Ethyl, n-Propyl, Isopropyl, n-Butyl, sec.-Butyl, Isobutyl oder tert.-Butyl, besonders bevorzugt H, und
- m, n und p: gleich oder verschieden sind und 1, 2, 3 oder 4, bevorzugt 1 oder 2, besonders bevorzugt 2 bedeuten.

Besonders bevorzugt sind Dithiophosphorsäure-Verbindungen der Formel (III), worin
- R⁵ und R⁶: gleich oder verschieden sind und Methyl, Ethyl, n-Propyl, Isopropyl, n-Butyl, sec.-Butyl, Isobutyl, tert.-Butyl, n-Pentyl, 2-Pentyl, 3-Pentyl, 2,2-Dimethylpropyl, 1,1,3,3-Tetramethylpentyl, n-Hexyl, 1-Methylhexyl, 1,1,3,3,5,5-Hexamethylhexyl, n-Heptyl, Isoheptyl, 1,1,3,3-Tetramethylbutyl, 1-Methylheptyl, 3-Methylheptyl, n-Octyl, 1,1,3,3-Tetramethylbutyl oder 2-Ethylhexyl bedeuten.

Besonders bevorzugte bi- oder polycyclische Amine der allgemeinen Formeln (IV-1) bzw. (IV-2) sind die folgenden der Formeln (IV-1a), (IV-1b), (IV-1c), (IV-1d) und (IV-2a):
**DBU:** 1,8-Diazabicyclo [5.4.0]undecen-7 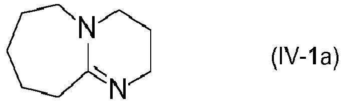
**DBN:** 1,5-Diazabicyclo[4.3.0]-nonen-5 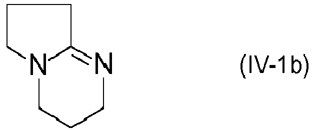
**TBD** 1,5,7-Triazabicyclo[4.4.0]dec-5-en 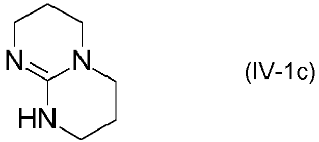
**MTBD** 7-Methyl-1,5,7-triazabicyclo[4.4.0]dec-5-en 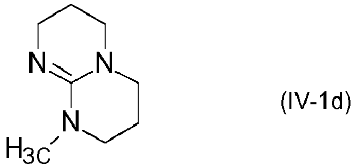
**DABCO:** 1,4-Diazabicyclo[2.2.2]octan

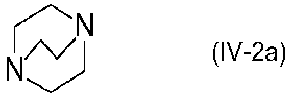

Somit sind besonders bevorzugte Dithiophosphorsäuresalze von bi- oder polycyclischen Aminen der allgemeinen Formeln (I) bzw. (II) die folgenden Dithiophosphorsäuresalze von bi- oder polycyclischen Aminen der Formeln (Ia), (Ib), (Ic), (Id) und (IIa). 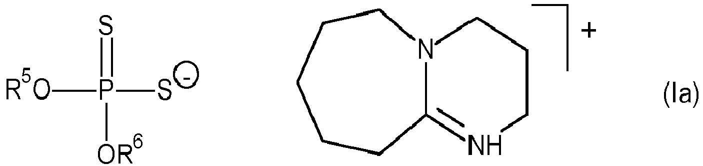 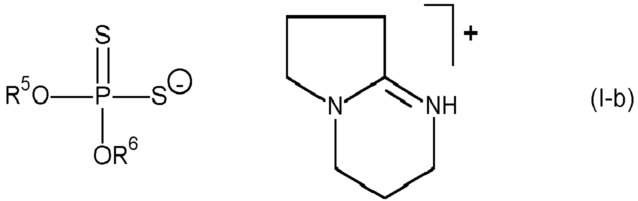 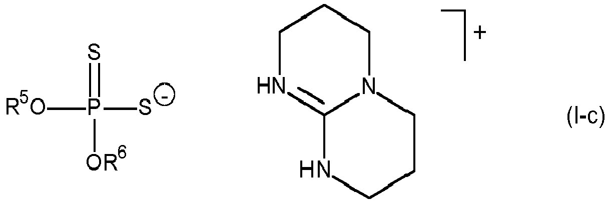 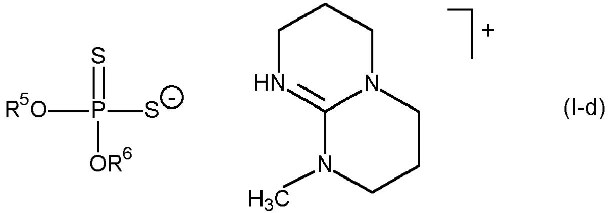 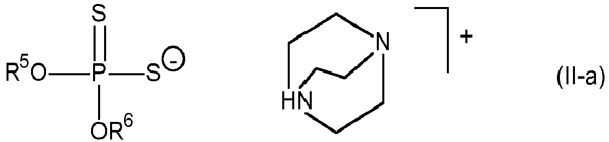 worin
- R⁵ und R⁶: gleich oder verschieden sind und Methyl, Ethyl, n-Propyl, Isopropyl, n-Butyl, sec.-Butyl, Isobutyl, tert.-Butyl, n-Pentyl, 2-Pentyl, 3-Pentyl, 2,2-Dimethylpropyl, 1,1,3,3-Tetramethylpentyl, n-Hexyl, 1-Methylhexyl, 1,1,3,3,5,5-Hexamethylhexyl, n-Heptyl, Isoheptyl, 1,1,3,3-Tetramethylbutyl, 1-Methylheptyl, 3-Methylheptyl, n-Octyl, 1,1,3,3-Tetramethylbutyl oder 2-Ethylhexyl, bevorzugt 2-Ethylhexyl, bedeuten.

In der erfindungsgemäßen Kautschukmischung wird mindestens ein Dithiophosphorsäuresalz eines bi- oder polycyclischen Amins in einer Menge von 0,1 bis 6,0 Gew.-Teilen, vorzugsweise 0,2 bis 5,5 Gew.-Teilen, besonders bevorzugt 0,4 bis 2,2 Gew.-Teilen und insbesondere 0,5 bis 2,0 Gew.-Teile, bezogen auf 100 Gew.-Teile der Komponente a) eingesetzt. Ganz besonders bevorzugt wird mindestens ein Dithiophosphorsäuresalz eines bi- oder polycyclischen Amins in einer Menge von 0,75 bis 1,8 Gew.-Teilen und insbesondere 1,0 bis 1,5 Gew.-Teilen, bezogen auf 100 Gew.-Teile der Komponente a) eingesetzt. Sofern zwei oder mehr Dithiophosphorsäuresalze bi- oder polycyclischer Amine b) eingesetzt werden, stellt die zuvor genannte Menge die Gesamtmenge dieser dar. Werden zwei oder mehr Kautschuke als Komponente a) eingesetzt, so dient die Summe aller Kautschuke als Basis für die vorgenannten Angaben in Gew.-Teilen. Dies gilt im Folgenden auch für alle anderen Mengenangaben für die übrigen Komponenten der erfindungsgemäßen Mischung.

Dithiophosphorsäuresalze von bi- oder polycyclischen Aminen sind im Stand der Technik nicht bekannt. In einer weiteren Ausführungsform betrifft die vorliegende Anmeldung daher Dithiophosphorsäuresalze von bi- oder polycyclischen Aminen.

Bevorzugt betrifft die vorliegende Anmeldung Dithiophosphorsäuresalze eines bi- oder polycyclischen Amins der folgenden allgemeinen Strukturformeln (I) oder (II), 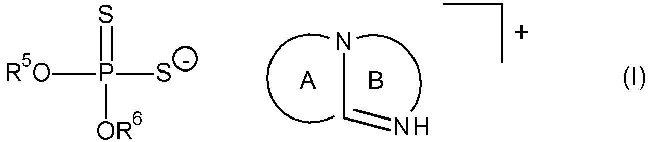 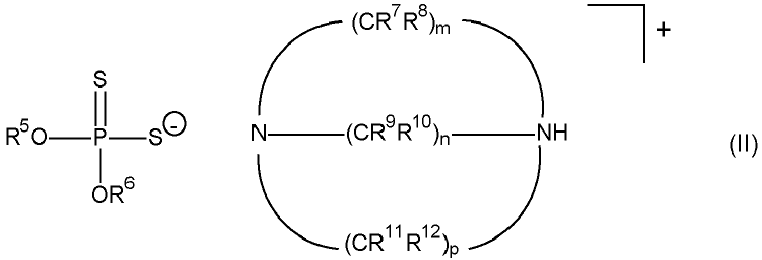 worin
- R⁵ und R⁶: gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
- A: für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten 5 bis 7 gliedrigen heterocyclischen Ring, der 1 oder 2 N-Atome aufweist;
- B: für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten, eine Doppelbindung aufweisenden, 5 bis 6 gliedrigen heterocyclischen Ring, der 2 N-Atome aufweist;
- R⁷, R⁸, R⁹, R¹⁰, R¹¹ und R¹²: gleich oder verschieden sind und für H oder aliphatische Reste mit 1 bis 4 Kohlenstoffatomen stehen, bevorzugt H, und
- m, n: und p gleich oder verschieden sind und 1, 2, 3 oder 4, bevorzugt 1 oder 2, besonders bevorzugt 2 bedeuten.

Besonders bevorzugt sind Dithiophosphorsäuresalze von bi- oder polycyclischen Aminen der vorstehend genannten Formeln (I-a), (I-b), (I-c), (I-d) oder (II-a).

Die erfindungsgemäßen Dithiophosphorsäuresalze von bi- oder polycyclischen Aminen können in doppelbindungshaltigen Kautschukmischungen eingesetzt werden, bevorzugt als Vulkanisationsbeschleuniger.

Ein weiterer Gegenstand der vorliegenden Anmeldung ist somit die Verwendung von Dithiophosphorsäuresalzen von bi- oder polycyclischen Aminen als Vulkanisationsbeschleuniger in Kautschukmischungen enthaltend mindestens einen doppelbindungshaltigen Kautschuk.
Bevorzugte Dithiophosphorsäuresalze von bi- oder polycyclischen Aminen und bevorzugte Mengen in den doppelbindungshaltigen Kautschukmischungen sowie bevorzugte doppelbindungshaltige Kautschuke sind vorstehend genannt.

### Komponente c): Füllstoff

Die erfindungsgemäße Kautschukmischung enthält bevorzugt mindestens einen Füllstoff. Füllstoffe sind dem Fachmann bekannt und kommerziell erhältlich. Geeignete Füllstoffe sind beispielsweise Kieselsäure, Ruß, Silikate, Oxide und organische Füllstoffe. Bevorzugt sind helle Füllstoffe, z.B. Kieselsäure, Silikate, Oxide und organische Füllstoffe, besonders bevorzugt ist Kieselsäure.

Wenn ein Füllstoff eingesetzt wird, was bevorzugt ist, werden der oder die Füllstoffe in der erfindungsgemäßen Zusammensetzung typischerweise in einer Menge von größer 0 bis 300 Gew.-Teilen, bevorzugt von 5 bis 200 Gew.-Teilen und besonders bevorzugt von 10 bis 150 Gew.-Teilen, ganz besonders bevorzugt von 20 bis 130 Gew.-Teilen, jeweils bezogen auf 100 Gew.-Teile der Komponente(n) a) eingesetzt. Die optimale Menge hängt ab von der Art des verwendeten Füllstoffs und der gewünschten Anwendung. Ein Fahrradreifen erfordert einen geringeren Verstärkungsgrad als ein Luftreifen für Personenkraftwagen oder Nutzfahrzeuge wie Lastkraftwagen.

Wird Kieselsäure oder "Silica" (Ullmann's Encyclopedia of Industrial Chemistry, VCH Verlagsgesellschaft mbH, D-69451 Weinheim, 1993, "Silica", S.635-645) verwendet, so handelt es sich um pyrogene (ibid. S. 635-642) oder um Fällungskieselsäure (ibid. 642-645). Fällungskieselsäuren werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Bevorzugt sind Fällungskieselsäuren mit spezifischen Oberflächen von 5 bis 1000 m²/g, vorzugsweise von 20 bis 400 m²/g, jeweils bestimmt nach BET. Für die Herstellung von Reifenlaufflächen mit geringem Rollwiderstand sind hochdispergierbare Fällungskieselsäuren bevorzugt. Beispiele für bevorzugte hochdispergierbare Kieselsäuren schließen beispielsweise ein: Perkasil® KS 430 (AKZO), BV 3380 und Ultrasil®7000 (Evonik-Degussa), Zeosil® 1165, MP 1115 MP und HRS 1200 MP (Rhodia), Hi-Si1 2000 (PPG), Zeopol® 8715, 8741 oder 8745 (Huber), Vulkasil® S, N und C von Lanxess und behandelte Fällungskieselsäuren wie beispielsweise mit Aluminium "dotierte" Kieselsäuren, die in der EP-A-0 735 088 beschrieben sind. Ein oder mehrere Kieselsäuretypen können verwendet werden.

Bevorzugt werden erfindungsgemäß Kieselsäuren mit spezifischen Oberflächen von 5 bis 1000 m²/g, bevorzugter 20 bis 400 m²/g, jeweils bestimmt nach BET, eingesetzt.

Kieselsäure wird üblicherweise in einer Menge von größer 0 bis 150 Gew.-Teilen, bevorzugt 1 bis 120 Gew.-Teilen, besonders bevorzugt 5 bis 100 Gew.-Teilen, bezogen auf 100 Gew.-Teile der Komponente(n) a) eingesetzt.

In den erfindungsgemäßen Kautschukmischungen eingesetzte Ruße sind dem Fachmann ebenfalls bekannt (siehe Stichworte "carbon" bzw. "carbon black" in Ullmann's Encyclopedia of Industrial Chemistry, VCH Verlagsgesellschaft mbH, D-69451 Weinheim, 1993, vol A 5 S.95-158). Sie werden bevorzugt nach dem gas black-, furnace black-, lamp black- und thermal black- Verfahren hergestellt und werden nach der neuen ASTM-Nomenklatur **(ASTM D 1765 und D 2516)** als N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N642, N 650, N 660, N 683, N 754, N 762, N 765, N 772, N 774, N 787, N 907, N 908 N 990, N 991 S 3 etc. bezeichnet. Die erfindungsgemäß verwendeten Ruße besitzen bevorzugt BET-Oberflächen zwischen 5 bis 200 m²/g.

Ruß wird in der erfindungsgemäßen Zusammensetzung - wenn sie eingesetzt werden - üblicherweise in einer Menge von größer 0 bis 150 Gew.-Teilen, bevorzugt von 1 bis 120 Gew.-Teilen und besonders bevorzugt von 5 bis 100 Gew.-Teilen bezogen auf 100 Gew.-Teile der Komponente(n) a) eingesetzt.

Weitere Füllstoffe, die eingesetzt werden können, sind:
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm
- natürliche Silikate, wie Kaolin, Kieselgur und andere natürlich vorkommende Kieselsäuren,
- Metalloxide, wie Aluminiumoxid, Magnesiumoxid , Calciumoxid,
- Metallcarbonate, wie Calciumcarbonat, Magnesiumcarbonat, Zinkcarbonat,
- Metallsulfate, wie Calciumsulfat, Bariumsulfat,
- Metallhydroxide, wie Aluminiumhydroxid und Magnesiumhydroxid,
- Glasfasern und Glasfaserprodukte (Latten, Stränge oder Mikroglaskugeln),
- Thermoplaste (Polyamid, Polyester, Aramid, Polycarbonat, syndiotaktisches 1,2 Polybutadien und trans-1,4-Polybutadien) sowie
- Cellulose, Cellulosederivate und Stärke.

Aluminiumoxid kann beispielsweise als hochdispergierbares Aluminiumoxid wie in der EP-A-0 810 258 beschrieben eingesetzt werden. Beispiele schließen ein: A125 oder CR125 (Baikowski), APA-1OORDX (Condea), Aluminiumoxid C (Degussa) und AKP-GO 15 (Sumitomo Chemicals).

### Komponente d): mindestens ein Silan

Falls die Kautschukmischung hydroxylhaltige Füllstoffe wie Kieselsäure enthält, ist es für die Erzielung einer guten Füllstoffverteilung und einer guten Ankopplung an die Kautschukmatrix vorteilhaft, bei der Herstellung der Mischung mindestens ein Silan, bevorzugt mindestens eine schwefelhaltige siliciumorganische Verbindung, einzusetzen. Die schwefelhaltigen siliciumorganischen Verbindungen weisen folgende Strukturelemente auf:
- ein siliciumorganisches Strukturelement, insbesondere eine Alkoxysilyl-, bevorzugt eine Trialkoxysilylgruppe,
- ein schwefelhaltiges Strukturelement, insbesondere einen Sulfid- oder Polysulfidrest Sₓ, worin x im Mittel etwa 1 bis 10, bevorzugt 1 bis 6 sein kann,
- eine zweiwertige sogenannte Spacergruppe Q, die das silicumorganische Strukturelement mit dem schwefelhaltigen Strukturelement verbindet.

Als schwefelhaltige siliciumorganische Verbindungen kommen insbesondere solche der folgende Grundstrukturen (V) und (VI) in Betracht: 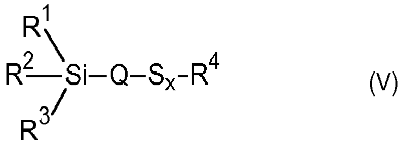 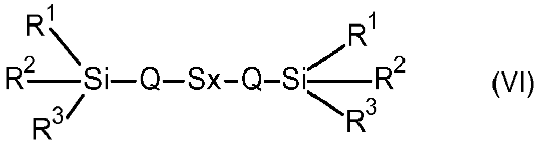 worin
- x: im Mittel 1 bis 10, bevorzugt 1 bis 6 sein kann,
- R¹, R² und R³: gleiche oder verschiedene Alkoxygruppen, bevorzugt gleiche oder verschiedene C₁-C₁₀-Alkoxygruppen, bedeuten,
- Q: eine Spacergruppe darstellt, bevorzugt auf der Basis von aliphatischen, heteroaliphatischen, aromatischen oder heteroaromatischen Kohlenstoffketten mit 1 bis 20 Kohlenstoffatomen, bevorzugt 1 bis 10 Kohlenstoffatomen, und optional 1 bis 3 Heteroatomen, insbesondere Sauerstoff, Schwefel oder Stickstoff,
- R⁴: Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest darstellt mit nachfolgenden Strukturen: 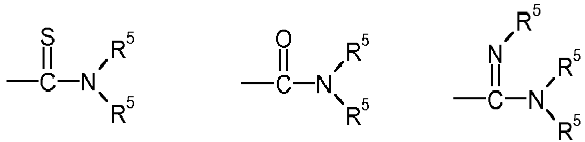 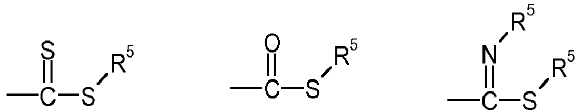 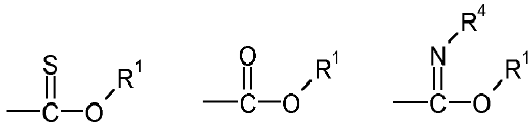 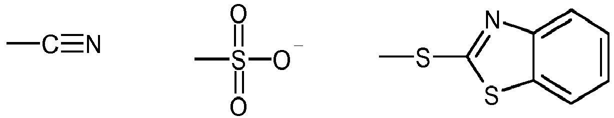 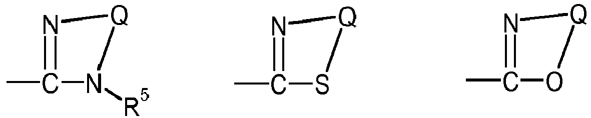 worin R⁵ für einen aliphatischen, heteroaliphatischen, cycloaliphatischen, aromatischen oder heteroaromatischen Rest mit 1 bis 20, bevorzugt 1 bis 10, Kohlenstoffatomen und 1 bis 3 Heteroatomen, wie Sauerstoff, Stickstoff oder Schwefel steht.

Bevorzugte schwefelhaltige siliciumorganische Verbindungen sind Bis(tri-ethoxy-silyl-propyl)-polysulfane der folgenden Strukturformel (VII) 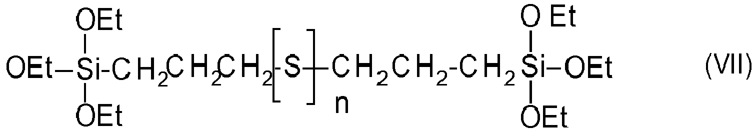 mit n = 2 bis 4. Solche Produkte sind kommerziell unter dem Namen Silan Si 75 (n = 2) und als Silan Si 69 (n = 4) der Evonik-Industries AG verfügbar.

Wenn ein Silan, bevorzugt eine schwefelhaltige siliciumorganische Verbindung, eingesetzt wird, was bevorzugt ist, wird das Silan, bevorzugt die schwefelhaltige siliciumorganische Verbindung, in der erfindungsgemäßen Zusammensetzung typischerweise in einer Menge von größer 0 bis 12 Gew.-Teilen, bevorzugt von 0,2 bis 11 Gew.-Teilen, jeweils bezogen auf 100 Gew.-Teile der Komponente(n) a) eingesetzt.

### Komponente e): mindestens ein Mikrogel

Als Komponente e) wird bevorzugt mindestens ein Mikrogel, bevorzugt mindestens ein hydroxylgruppenhaltiges Mikrogel, eingesetzt.

Mikrogele und deren Herstellung sind dem Fachmann bekannt. Hydroxylgruppenhaltige Mikrogele im Sinne dieser Erfindung weisen Wiederholungseinheiten mindestens eines hydroxylgruppenhaltigen Monomers (D), mindestens eines vernetzenden Monomers (C) und mindestens eines konjugierten Diens (A) und/oder mindestens eines vinylaromatischen Monomers (B) auf.

Dies bedeutet, dass es möglich ist, ein hydroxylgruppenhaltiges Mikrogel mit Wiederholungseinheiten der drei Monomertypen (A), (C) und (D) bzw. (B), (C) und (D) einzusetzen. Alternativ kann ein hydroxylgruppenhaltiges Mikrogel mit Wiederholungseinheiten aller vier Monomertypen (A), (B), (C) und (D) eingesetzt werden.

Als **konjugierte Diene (A)** werden vorzugsweise 1,3-Butadien, Isopren, 2,3-Dimethyl-1,3-butadien und Chloropren verwendet. Bevorzugt sind 1,3-Butadien und Isopren.

Es werden vorzugsweise 0 bis 94,9 Gew.-%, bevorzugt 0 bis 94,0 Gew.-%, besonders bevorzugt 0 bis 93,5 Gew.-%, des Diens (A), jeweils bezogen auf 100 Gew.-Teile der bei der Polymerisation verwendeten Monomeren, eingesetzt.

Als **vinylaromatische Monomere (B)** werden beispielsweise Styrol, α-Methylstyrol, 2-Methylstyrol, 3-Methylstyrol, 4-Methylstyrol, 2,4-Dimethylstyrol, 2,4-Diisopropylstyrol, 4-tert.-Butylstyrol oder tert.-Butoxystyrol verwendet. Bevorzugt sind Styrol und α-Methylstyrol.

Es werden im Allgemeinen 0 bis 94,9 Gew.-%, vorzugsweise 0 bis 94,0 Gew.-%, besonders bevorzugt 0 bis 93,5 Gew.-%, der vinylaromatischen Monomeren (B), jeweils bezogen auf 100 Gew.-Teile der bei der Polymerisation verwendeten Monomeren, eingesetzt.

Als **vernetzende Monomere (C)** werden Monomere eingesetzt, die mindestens 2 Doppelbindungen im Molekül enthalten. Hierzu gehören die (Meth)acrylate von Diolen und mit 1 bis 20 Kohlenstoffatomen wie Ethandioldi(meth)acrylat, 1,2-Propandioldi(meth)acrylat, 1,3-Propandiol (meth)acrylat, 1,2-Butan-dioldi(meth)acrylat, 1,3-Butandioldi(meth)acrylat, 1,4-Butandioldi(meth)acrylat, 1,6-Hexandioldi-(meth)acrylat (C1), Polyethylengykoldi(meth)acrylate und Polypropylenglykoldi(meth)acrylate sowie Diole auf der Basis von Mischpolymerisaten von Ethylenoxid und Propylenoxid mit Polymerisationsgraden von 1 bis 25 (C2), Diole auf der Basis von polymerisiertem Tetrahydrofuran mit Polymerisationsgraden von 1 bis 25 (C3), die Bis- und Tris-(meth)acrylate von dreiwertigen Alkoholen wie Trimethylolpropandi(meth)acrylat, Trimethylolpropantri(meth)acrylat, Glycerindi(meth)acrylat und Glycerintri(meth)acrylat (C4), die Bis-, Tris- und Tetra-(meth)acrylate von vierwertigen Alkoholen wie Pentaerythritdi(meth)acrylat, Pentaerythrittri(meth)acrylat und Pentaerythrittetra(meth)acrylat (C5), aromatische Polyvinylverbindungen (C6) wie Divinylbenzol, Diisopropenylbenzol, Trivinylbenzol, sowie sonstige Verbindungen mit mindestens zwei Vinylgruppen wie Triallcyanurat, Triallylisocyanurat, Crotonsäurevinylester und Crotonsäureallylester (C7). Bevorzugt sind die Ester der (Meth)acrylsäure von Ethandiol, 1,3-Propandiol, 1,4-Butandiol, 1,6-Hexandiol, Trimethylolpropan, Pentaerythrit sowie die aromatische Polyvinylverbindung Divinylbenzol.

Die vernetzenden Monomeren (C) werden in einer Menge von 0,1 Gew.-% bis 15 Gew.-%, bevorzugt 0,5 bis 12,5 Gew.-%, besonders bevorzugt 1 bis 7,5 Gew.-%, jeweils bezogen auf 100 Gew.-Teile der bei der Polymerisation verwendeten Monomeren, eingesetzt.

Neben einer Reihe anderer Parameter, wie der bei der Polymerisation üblicherweise eingesetzten Reglermenge, des Polymerisationsumsatzes und der Polymerisationstemperatur, werden der Gelgehalt und der Quellungsindex der Mikrogele vor allem durch die Menge an vernetzendem Monomer (C) beeinflusst. Außerdem wird durch das Monomer (C) die Glastemperatur von entsprechenden unvernetzten, aus den Monomeren (A) und (B) bestehenden, Homo- und/oder Copolymeren erhöht.

Als hydroxylgruppenhaltige Monomere (D) werden im Allgemeinen Hydroxyalkyl(meth)acrylate (D1), Hydroxyalkylcrotonate (D2), Mono(meth)acrylate von Polyolen (D3), hydroxylgruppenmodifizierte ungesättigte Amide (D4), hydroxylgruppenhaltige aromatische Vinylverbindungen (D5) sowie sonstige hydroxylgruppenhaltige Monomere (D6) eingesetzt.

Hydroxyalkyl(meth)acrylate (D1) sind beispielsweise 2-Hydroxyethyl(meth)acrylat, 3-Hydroxyethyl(meth)acrylat, 2-Hydroxpropyl(meth)acrylat, 3-Hydroxpropyl(meth)acrylat, 2-Hydroxybutyl(meth)acrylat, 3-Hydroxybutyl(meth)acrylat und 4-Hydroxybutyl(meth)acrylat. Hydroxyalkylcrotonate (D2) sind beispielsweise 2-Hydroxyethylcrotonat, 3-Hydroxyethylcrotonat, 2-Hydroxpropylcrotonat, 3-Hydroxpropylcrotonat, 2-Hydroxybutylcrotonat, 3-Hydroxybutylcrotonat und 4-Hydroxybutylcrotonat.

Mono(meth)acrylate von Polyolen (D3) leiten sich von zwei- und mehrwertigen Alkoholen wie Ethylenglykol, Propandiol, Butandiol, Hexandiol, Trimethylolpropan, Glycerin, Pentaerythrit sowie von oligomerisiertem Ethylenglykol und Propylenglykol, die 1 bis 25 der genannten Glykoleinheiten enthalten, ab.

Hydroxylgruppenmodifizierte ungesättigte Amide (D4) sind beispielsweise Monomere wie N-Hydroxymethyl(meth)acrylamid, N-(2-Hydroxyethyl(meth)acrylamid und N,N-Bis(2-Hydroxyethyl) (meth)acrylamid.

Hydroxylgruppenhaltige aromatische Vinylverbindungen (D5) sind 2-Hydroxystyrol, 3-Hydroxystyrol, 4-Hydroxystyrol, 2-Hydroxy-α-methylstyrol, 3-Hydroxy-α-methylstyrol, 4-Hydroxy-α-methylstyrol und 4-Vinylbenzylakohol.

Ein weiteres hydroxylgruppenhaltiges Monomer (D6) ist beispielsweise (Meth)allylalkohol.

Die hydroxylgruppenhaltigen Monomeren (D) werden in einer Menge von vorzugsweise 0,1 bis 20 Gew.-%, bevorzugt 0,5 bis 15 Gew.-%, besonders bevorzugt 1 bis 12,5 Gew.-%, jeweils bezogen auf 100 Gew.-Teile der bei der Polymerisation verwendeten Monomeren, eingesetzt.

Durch das Verhältnis der einpolymerisierten Monomeren (A), (B), (C) und (D) wird die Glastemperatur des Mikrogels festgelegt. Für eine Abschätzung der Glastemperatur kann die Fox-Flory-Beziehung herangezogen werden, wobei für die Glastemperatur des Mikrogels in erster Näherung der Gewichtsanteil der Monomeren (A) und (B) entscheidend ist.

Wenn ein Mikrogel e), bevorzugt hydroxylgruppenhaltiges Mikrogel, eingesetzt wird, was bevorzugt ist, wird das Mikrogel, bevorzugt das hydroxylgruppenhaltige Mikrogel, in der erfindungsgemäßen Zusammensetzung typischerweise in einer Menge von größer 0 bis 12 Gew.-Teilen, bevorzugt von 0,2 bis 11 Gew.-Teilen, jeweils bezogen auf 100 Gew.-Teile der Komponente(n) a) eingesetzt.

Diese Mikrogele, bevorzugt diese hydroxylgruppenhaltigen Mikrogele, besitzen typischerweise einen Gelgehalt von mehr als 70 Gew.-%, vorzugsweise mehr als 75 Gew.-%, besonders bevorzugt mehr als 80 Gew.-%. Sie weisen darüber hinaus einen Quellungsindex von im Allgemeinen weniger als 30, vorzugsweise weniger als 25, besonders bevorzugt weniger als 20, auf und verfügen - im Falle der bevorzugten hydroxylgruppenhaltigen Mikrogele - über einen Gehalt einpolymerisierter hydroxylhaltiger Monomere von größer als 0,1 Gew.-%. Die Hydroxylzahl der erhaltenen Mikrogele ist im Allgemeinen größer als 0,5. Die Mikrogele besitzen ferner eine gute Scher- und Lagerstabilität. Die Glastemperaturen Mikrogele, bevorzugt der hydrogxylgruppenhaltigen Mikrogele, liegen üblicherweise im Bereich von -78 °C bis 150 °C, vorzugsweise zwischen -78 °C bis 125 °C.

Besonders bevorzugt sind hydroxylgruppenhaltige Mikrogele auf Basis der Monomere Butadien, Trimethylolpropantrimethacrylat und Hydroxyethylmethacrylat, ferner hydroxylgruppenhaltige Mikrogele auf der Basis der Monomere Butadien, Styrol, Trimethylolpropantrimethacrylat und Hydroxyethylmethacrylat, sowie Mikrogele auf Basis der Monomere Styrol, Trimethylolpropantrimethacrylat und Hydroxyethylmethacrylat.

Die Herstellung der Mikrogele, bevorzugt der hydroxylgruppenhaltigen Mikrogele, erfolgt über eine übliche Emulsionspolymerisation der entsprechenden Monomere, vorzugsweise bei einer Temperatur von 10 bis 100 °C, besonders bevorzugt 12 bis 90 °C, insbesondere 15 bis 50 °C. Es ist möglich, die Emulsionspolymerisation in isothermer, teiladiabatischer oder volladiabatischer Fahrweise durchzuführen und es kann sich ein Verfahrensschritt der Koagulation anschließen, welche bei Temperaturen oberhalb der Glastemperatur des Mikrogels durchgeführt wird. Die Koagulationstemperatur liegt dabei vorzugsweise mindestens 10 °C, besonders bevorzugt mindestens 15 °C, insbesondere mindestens 20°C, höher als die Glastemperatur des Mikrogels. Die Einhaltung dieser erfindungsgemäß vorgesehenen Koagulationstemperaturen hat einen mitbestimmenden Einfluss auf die Krümelgröße der erhaltenen Mikrogele. Geeignete Polymerisationsinitiatoren sind Verbindungen, die in Radikale zerfallen. Hierzu gehören Verbindungen, die eine -O-O- Einheit (Peroxo-Verbindungen), eine -O-O-H Einheit (Hydroperoxyd), sowie eine -N=N- Einheit (Azoverbindung) enthalten. Auch eine Initiierung über Redoxsysteme ist möglich. Des Weiteren kann unter Zusatz von dem Fachmann bekannten Reglersubstanzen gearbeitet werden. Die Beendigung der Emulsionspolymerisation erfolgt durch dem Fachmann ebenfalls geläufige Stopper. Es hat sich ferner bewährt, die Emulsionspolymerisation unter Einsatz mindestens eines Salzes einer modifizierten Harzsäure (I) und mindestens eines Salzes einer Fettsäure (II) durchzuführen.

Modifizierte Harzsäuren sind dabei Verbindungen, die durch Dimerisierung, Disproportionierung und/oder Hydrierung von unmodifizierten Harzsäuren erhalten werden. Als unmodifizierte Harzsäuren sind beispielsweise Pimarsäure, Neoabietinsäure, Abietinsäure, Levopimarsäure und Palustrinsäure geeignet. Bevorzugt ist die modifizierte Harzsäure eine disproportionierte Harzsäure (Ullmann's Encyclopedia of Industrial Chemistry, 6. Auflage, Band 31, S. 345-355), die kommerziell erhältlich ist. Die eingesetzten Harzsäuren sind aus Wurzeln, Kiefernbalsam und Tallöl gewonnene tricyclische Diterpencarbonsäuren. Diese können z.B. zu disproportionierten Harzsäuren umgearbeitet werden, wie es in W. Bardendrecht, L.T. Lees in Ullmanns Encyclopädie der Technischen Chemie, 4. Auflage, Bd. 12, 525 - 538, Verlag Chemie, Weinheim - New-York 1976 beschrieben ist. Daneben wird mindestens ein Salz einer Fettsäure eingesetzt. Diese enthalten vorzugsweise 6 bis 22 C-Atome, besonders bevorzugt 6 bis 18 C-Atome pro Molekül. Sie können vollständig gesättigt sein oder eine oder mehrere Doppelbindungen oder Dreifachbindungen im Molekül enthalten. Beispiele für solche Fettsäuren sind Capronsäure, Laurinsäure, Myristinsäure, Palmitinsäure, Stearinsäure, Ölsäure, Linolsäure und Linolensäure. Die Carbonsäuren können in einer weiteren Ausgestaltung der vorliegenden Erfindung auch in herkunftsspezifischen Mischungen, wie beispielsweise Castoröl, Baumwollsaat, Erdnussöl, Leinsamenöl, Kokosnussfett, Palmkernöl, Olivenöl, Rapsöl, Sojabohnenöl, Fischöl und Rindertalg, vorliegen (Ullmann's Encyclopedia of Industrial Chemistry, 6. Auflage, Band 13, S. 75-108). Bevorzugte Carbonsäuren leiten sich von Rindertalg ab und sind teilhydriert. Insbesondere bevorzugt ist daher die teilhydrierte Talgfettsäure. Sowohl die Harzsäuren als auch die Fettsäuren sind kommerziell als freie Carbonsäuren, in teil- oder vollneutralisierter Form erhältlich. Für die Ermittlung des zur Herstellung der Salze bei der Polymerisation notwendigen Alkalizusatzes werden die zum Einsatz kommenden Harz- und Fettsäuren durch acidimetrische Titration charakterisiert). Auf diese Weise werden die Gehalte an freien Carbonsäuren und an Emulgatorsalzen ermittelt, um die für die gezielte Einstellung der Neutralisationsgrade der bei der Polymerisation eingesetzten Harz/Fettsäuregemische zu berechnen.

### Komponente f): Schwefel und/oder mindestens ein Schwefelspender

Zur Vernetzung der erfindungsgemäßen Kautschukmischungen eignet sich als Vernetzer entweder Schwefel in Form elementaren Schwefels oder ein Schwefelspender. Elementarer Schwefel wird als löslicher oder unlöslicher Schwefel eingesetzt. Daher enthalten die erfindungsgemäßen vulkanisierbaren Kautschukmischungen bevorzugt Schwefel und/oder mindestens einen Schwefelspender.

Unter löslichem Schwefel versteht man die bei gewöhnlichen Temperaturen einzige stabile Form, den gelben Cyclooctaschwefel (S₈) oder α-S, die aus typischen rhombischen Kristallen besteht und in Schwefelkohlenstoff hoch löslich ist. So lösen sich bei 25°C in 100g CS₂ 30g α-S (Stichwort "Schwefel" des online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 - 95 % in Schwefelkohlenstoff unlöslich.

Beispiele für Schwefelspender sind Caprolactam Disulfid (CLD), Dithiomorpholin (DTDM) oder 2-(4-Morpholinodithio)benzothiazol (MBSS). (W. Hoffmann "Kautschuktechnologie", S. 254 ff, Gentner Verlag Stuttgart (1980)).

Wenn Schwefel und/oder Schwefelspender eingesetzt werden, was bevorzugt ist, werden der Schwefel und/oder Schwefelspender bevorzugt in der erfindungsgemäßen Kautschukmischung in einer Menge im Bereich von größer 0 bis 15 Gew.-Teilen, bevorzugt 0,1-10 Gew.-Teilen, bezogen auf 100 Gew.-Teile der Komponente(n) a) eingesetzt.

### Komponente g): Kautschukadditive

Die erfindungsgemäße vulkanisierbare Kautschukmischung kann des Weiteren die im Folgenden genannten Kautschukadditive enthalten.

### • Vulkanisationsbeschleuniger

In der erfindungsgemäßen Kautschukmischung können ferner auch noch einer oder mehrere weitere Vulkanisationsbeschleuniger zum Einsatz kommen, die für die Schwefelvulkanisation geeignet sind.

Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Im Rahmen der vorliegenden Erfindung können solche Vulkanisationsbeschleuniger z.B. ausgewählt werden aus der Gruppe der Xanthogenate, Dithiocarbamate, Tetramethylthiuram-disulfide, Thiurame, Thiazole, Thioharnstoff-Derivate, Amin-Derivate wie Tetramine, Sulfenimide, Piperazine, Amincarbamate, Sulfenamide, Bisphenol- und Triazin-Derivate.

Geeignete Vulkanisationsbeschleuniger sind Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalze (ZMBT), Kupferdimethyldithiocarbamat (CDMC), Benzothiazyl-2-sulfenmorpholid (MBS), Benzothiazyldicyclohexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyl-dithiocarbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylenthioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methylpiperazin); Hexamethylendiamincarbamat (HMDAC); Benzothiazyl-2-tert.-butylsulfenamid (TOBS), N,N'-Diethylthiocarbamyl-N'-cyclohexylsulfenamid (DETCS), N-Oxidiethylendithio-carbamyl-N'-oxydiethylensulfenamid (OTOS), 4,4'-Dihydroxydiphenylsulfon (Bisphenol S), Zn-isopropylxanthogenat (ZIX), Selen-, Tellur-, Blei-, Kupfer- und Erdalkalisalze von Dithiocarbaminsäuren; Pentamethylenammonium-N-pentamethylendithiocarbamat; Cyclohexylethylamin; Dibutylamin; Polyethylenpolyamine und Polyethylenpolyimine wie z.B. Triethylentetramin (TETA) handeln.

Wenn Vulkanisationsbeschleuniger eingesetzt werden, werden diese bevorzugt in einer Menge im Bereich von 0,1 bis 15 Gew.-Teilen, bevorzugt 0,1-10 Gew.-Teilen, bezogen auf 100 Gew.-Teile der Komponente(n) a) eingesetzt.

### • Zinkoxid und Stearinsäure und/oder Zinkstearat

In der erfindungsgemäßen Mischung kann ferner Zinkoxid als Aktivator für die Schwefelvulkanisation enthalten sein. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen und damit zu einer verbesserten Alterungsbeständigkeit Die erfindungsgemäße Kautschukzusammensetzung enthält ferner Stearinsäure (Octadecansäure). Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion der Vulkanisationsbeschleuniger führt. Ferner kommt es zu einer Komplexbildung mit Zinkionen im Rahmen der Schwefelvulkanisation.

Wenn Zinkoxid in den erfindungsgemäßen vulkanisierbaren Kautschukmischungen eingesetzt wird, was bevorzugt ist, wird Zinkoxid üblicherweise in einer Menge von 0,5 bis 15 Gew.-Teilen, bevorzugt 1 bis 7,5 Gew.-Teilen, besonders bevorzugt 1 bis 5 Gew.-Teilen, bezogen auf 100 Gew.-Teile der Komponente(n) a) eingesetzt.

Wenn Stearinsäure in den erfindungsgemäßen vulkanisierbaren Kautschukmischungen eingesetzt wird, was bevorzugt ist, wird Stearinsäure in einer Menge von 0,1 bis 7, bevorzugt 0,25 bis 7 Gew.-Teilen, bevorzugt 0,5 bis 5 Gew.-Teilen, bezogen auf 100 Gew.-Teile der Komponente(n) a) eingesetzt.

Alternativ oder aber auch zusätzlich zur Kombination aus Zinkoxid und Stearinsäure kann Zinkstearat eingesetzt werden. In diesem Fall wird - wenn Zinkstearat in den erfindungsgemäßen vulkanisierbaren Kautschukmischungen eingesetzt wird - Zinkstearat üblicherweise in einer Menge von 0,25 bis 5 Gew.-Teilen, bevorzugt 1 bis 3 Gew.-Teile, jeweils bezogen auf 100 Gew.-Teile der Komponente(n) a) verwendet.

### • Weitere Kautschukadditive

Weitere optional als Komponente(n) g) der erfindungsgemäßen Zusammensetzung zuzusetzende Kautschukadditive (weitere Kautschukadditive) umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, organische Säuren, Vulkanisationsverzögerer, Metalloxide, sowie weitere Füllstoffaktivatoren, wie beispielsweise Triethanolamin, Trimethylolpropan, Polyethylenglykol, Hexantriol oder andere Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vulkanisationsverzögerer** können den erfindungsgemäßen Zusammensetzungen beispielsweise Sulfonamide, Sulfanilide oder Phthalimide zugesetzt werden. Geeignet sind z.B. N-Trichlormethylsulfenylbenzolsulfanilid, N-Cyclohexylthiophthalimid, Phtalsäureanhydrid (PTA), Salicylsäure (SAL), N-Nitrosodiphenylamin (NDPA), Trichlormelamin (TCM), Maleinsäureanhydrid (MSA) und N-Trichlormethylsulfenylbenzolsulfanilid (letzteres kommerziell unter der Bezeichnung Vulkalent® E erhältlich). Entsprechende Vulkanisationsverzögerer sind ebenfalls in J. Schnetger, "Lexikon der Kautschuktechnik", 3. Auflage, Hüthig Verlag, Heidelberg, 2004, Seite 590 erwähnt.

Als **Antioxidantien** können den erfindungsgemäßen Zusammensetzungen z.B. Mercaptobenzimidazol (MBI), 2-Mercaptomethylbenzimidazol (2-MMBI), 3-Mercaptomethylbenzimidazol (3-MMBI), 4-Mercaptomethylbenzimidazol (4-MMBI), 2,2,4-Trimethyl-1,2-dihydrochinlin (TMQ), Nickeldibutyldithiocarbamat (NDBC), 2,6-Di-tert.-butyl-p-kresol (BHT) und 2,2'-Methylen-bis(4-methyl-6tert.butyl-phenol) (BKF) zugesetzt werden. Diese Antioxidantien können auch in nicht-staubenden, insbesondere auch polymergebundenen Lieferformen eingesetzt werden (als "Microgranulat" (MG) oder "Microgranulat coated" (MGC)).

Darüberhinaus sind auch **Alterungsschutzmittel** als Komponente(n) f) einsetzbar, beispielsweise in Form verfärbender Alterungsschutzmittel mit Ermüdungs- und Ozonschutzwirkung, z.B. N-Isopropyl-N'-phenyl-p-phenylen-diamin (IPPD); verfärbender Alterungsschutzmittel mit Ermüdungsschutz, aber ohne Ozonschutzwirkung, z.B. Phenyl-α-naphthylamin (PAN); verfärbender Alterungsschutzmittel mit geringer Ermüdungs- und ohne Ozonschutzwirkung, z.B. octyliertes Diphenylamin (ODPA); nicht verfärbender Alterungsschutzmittel mit Ermüdungsschutz und gutem Hitzeschutz, z.B. styrolisierte Phenole (SPH); nicht verfärbender Alterungsschutzmittel ohne Ermüdungs- oder Ozonschutzwirkung, z.B. 2,6-Di-tert.-butyl-p-kresol (BHT); nicht verfärbender Ozonschutzmittel ohne Alterungsschutzwirkung, z.B. Wachse (Gemische aus speziellen Kohlenwasserstoffen), cyclischer Acetale und Enolether; und in Form von Hydrolyseschutzmitteln, wie z.B. Polycarbodümiden.

Ferner können den erfindungsgemäßen Zusammensetzungen auch Mastikationschemikalien zugesetzt werden, welche vorzugsweise ausgewählt werden aus der Gruppe bestehend aus Thiophenolen, Thiophenolzinksalzen, substituierten aromatischen Disulfiden, Peroxiden, Derivaten von Thiocarbonsäuren, Hydrazinderivaten, Nitrosoverbindungen und Metallkomplexen, besonders bevorzugt Eisenhemiporphyrazin, Eisenphthalocyanin, Eisenacetonylacetat und dessen Zn-Salz.

Die als Komponente(n) g) verwendbaren weiteren Kautschukadditive werden in üblichen Mengen, die sich u.a. nach dem Verwendungszweck richten, eingesetzt. Übliche Mengen für die weiteren Kautschukadditive liegen - wenn diese in den erfindungsgemäßen vulkanisierbaren Kautschukmischungen eingesetzt werden - beispielsweise 0 bis 50 Gew.-Teilen, vorzugsweise 0,1 bis 45 Gew.-Teilen, besonders bevorzugt 1,0 bis 40 Gew.-Teilen, ganz besonders bevorzugt 1,5 bis 30 Gew.-Teilen, bezogen auf 100 Gew.-Teile der Komponente(n) a). Diese Mengen beziehen sich auf die weiteren Kauschukadditive. Die Mengen der optionalen Kautschukadditive Vulkanisationsbeschleuniger bzw. Zinkoxid und Stearinsäure und/oder Zinkstearat sind vorstehend genannt und kommen zusätzlich zu den genannten Mengen der weiteren Kautschukadditive g).

**Bevorzugt** enthält die erfindungsgemäße Kautschukmischung neben den Komponenten a) und b) mindestens einen Füllstoff, bevorzugt mindestens einen hellen Füllstoff, besonders bevorzugt Kieselsäure als Komponente c) und mindestens ein Silan, bevorzugt mindestens eine schwefelhaltige siliciumorganische Verbindung als Komponente d). Bevorzugte Ausführungsformen und Mengen der Komponenten a), b), c) und d) sind vorstehend genannt.

**Besonders bevorzugt** enthält die erfindungsgemäße Kautschukmischung neben den Komponenten a), b), optional c) und optional d) mindestens ein Mikrogel e). Bevorzugte Ausführungsformen und Mengen der Komponente e) sind vorstehend genannt. Besonders bevorzugt enthält die erfindungsgemäße Kautschukmischung die Komponenten a), b), c), d) und e).

**Weiter bevorzugt** enthält die erfindungsgemäße Kautschukmischung neben den Komponenten a), b), optional c), optional d) und optional e) Schwefel und/oder mindestens einen Schwefelspender f). Bevorzugte Ausführungsformen und Mengen der Komponente f) sind vorstehend genannt. Ganz besonders bevorzugt enthält die erfindungsgemäße Kautschukmischung die Komponenten a), b), c), d), e) und f).

Die vorliegende Anmeldung betrifft bevorzugt erfindungsgemäße vulkanisierbare Kautschukmischungen enthaltend
a) mindestens einen doppelbindungshaltigen Kautschuk,
b) mindestens ein Dithiophosphorsäuresalz eines bi- oder polycyclischen Amins der Formel (I-a), (I-b), (I-c), (I-d) oder (II-a), 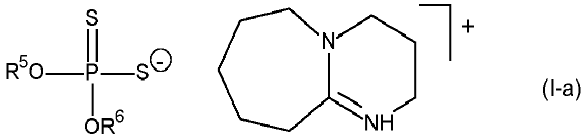 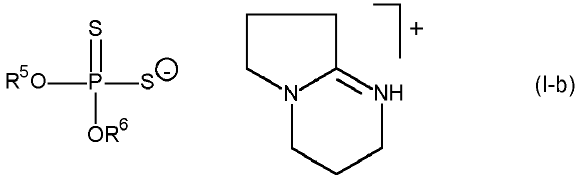 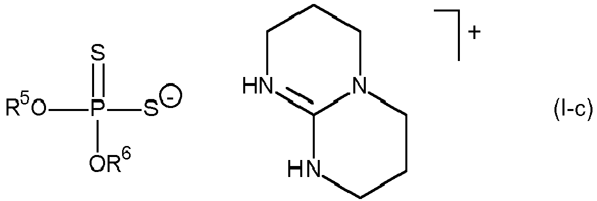 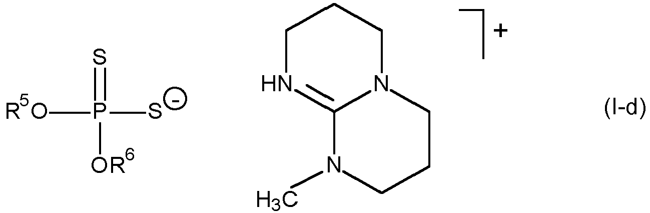 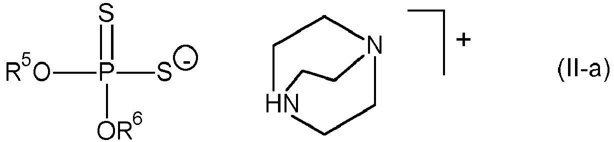
c) mindestens einen hellen Füllstoff,
d) mindestens ein Silan, und
e) mindestens ein Mikrogel.

Besonders bevorzugt enthält die vulkanisierbare Kautschukmischung
a) mindestens einen Kautschuk ausgewählt aus der Gruppe bestehend aus NR (Naturkautschuk), SBR (Vinylaromat/Dien-Kautschuke), BR (Polybutadienkautschuk), IR (Polyisopren), IBR (Isopren/Butadien-Kautschuk), IIR (Isobuten/Isopren-Kautschuk), BIR (Butadien/Isopren-Kautschuk), SIBR (Styrol/Isopren-Kautschuk) und Mischungen daraus,
b) mindestens ein Dithiophosphorsäuresalz eines bi- oder polycyclischen Amins der Formel (I-a), (I-b), (I-c), (I-d) oder (II-a), 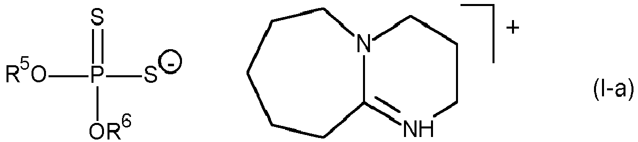 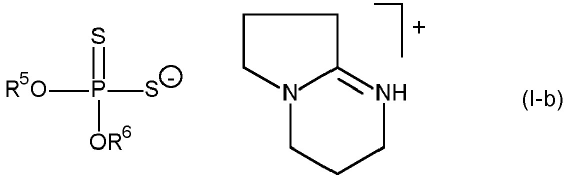 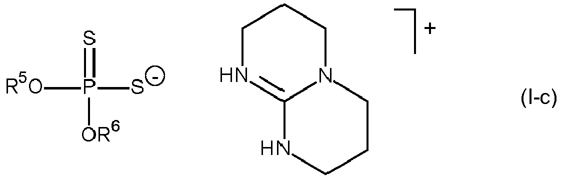 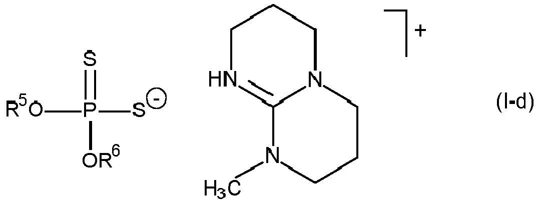 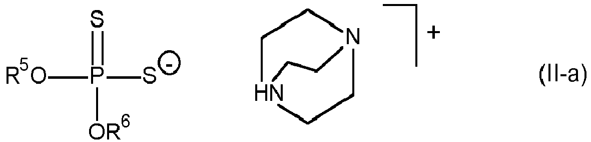
c) Kieselsäure als hellen Füllstoff,
d) mindestens einem Bis(triethoxysilylpropyl)polysulfan der folgenden Strukturformel (VII) mit n= 2 oder 4 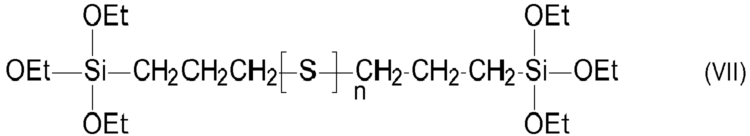 und
e) mindestens ein hydroxygruppenhaltiges Mikrogel ausgewählt aus der Gruppe bestehend aus Mikrogelen auf Basis der Monomere Butadien, Trimethylolpropantrimethacrylat und Hydroxyethylmethacrylat, Mikrogelen auf Basis der Monomere Butadien, Styrol, Trimethylolpropantrimethacrylat und Hydroxyethylmethacrylat und Mikrogelen auf Basis der Monomere Styrol, Trimethylolpropantrimethacrylat und Hydroxyethylmethacrylat, wobei diese Mikrogele besonders bevorzugt (i) eine Glastemperatur im Bereich von -78 °C bis 150 °C, insbesondere von -78 °C bis 125 °C, (ii) einen Quellungsindex von weniger als 30, insbesondere weniger als 25, ganz besonders bevorzugt weniger als 20 und (iii) einen Gehalt einpolymerisierter hydroxylhaltiger Monomerer von größer als 0,1 Gew.-% mit Hydroxylzahlen größer als 0,5 aufweisen.

Ganz besonders bevorzugt enthalten die vorstehend genannten vulkanisierbare Kautschukmischungen zusätzlich
f) Schwefel und/oder mindestens einen Schwefelspender.

Besonders bevorzugt betrifft die vorliegende Anmeldung eine erfindungsgemäße vulkanisierbare Kautschukmischung enthaltend
a) mindestens einen doppelbindungshaltigen Kautschuk,
b) 0,1 bis 6,0 Gew.-Teile, vorzugsweise 0,2 bis 5,5 Gew.-Teile, besonders bevorzugt 0,4 bis 2,2 Gew.-Teile und insbesondere 0,5 bis 2,0 Gew.-Teile, mindestens eines Dithiophosphorsäuresalzes eines bi- oder polycyclischen Amins,
c) größer 0 bis 300 Gew.-Teile, bevorzugt 5 bis 200 Gew.-Teile, besonders bevorzugt 10 bis 150 Gew.-Teile, ganz besonders bevorzugt von 20 bis 130 Gew.-Teile mindestens eines Füllstoffs,
d) größer 0 bis 12 Gew.-Teile, bevorzugt von 0,2 bis 11 Gew.-Teile mindestens eines Silans,
e) 0 bis 12 Gew.-Teile, bevorzugt größer 0 bis 12 Gew.-Teile, besonders bevorzugt 0,2 bis 11 Gew.-Teile mindestens eines Mikrogels,
f) 0 bis 15 Gew.-Teile, bevorzugt größer 0 bis 15 Gew.-Teile, besonders bevorzugt 0,1-10 Gew.-Teile Schwefel und/oder mindestens einen Schwefelspender,
g) 0 bis 50 Gew.-Teile, vorzugsweise 0,1 bis 45 Gew.-Teile, besonders bevorzugt 1,0 bis 40 Gew.-Teile, ganz besonders bevorzugt 1,5 bis 30 Gew.-Teile eines oder mehrerer weiterer Kautschukadditive,
wobei alle vorgenannten Gew.-Teil Angaben für die Komponenten b) bis g) jeweils auf 100 Gewichtsteile der Kautschukkomponente(n) a) bezogen sind.

Bevorzugte Komponenten a), b), c), d), e), f) und g) sind vorstehend genannt.

### Herstellung der erfindungsgemäßen Kautschukmischung:

Die Herstellung der erfindungsgemäßen Kautschukmischung erfolgt durch Mischen der Komponenten a) und b), gegebenenfalls c), gegebenenfalls d), gegebenenfalls e), gegebenenfalls f) und gegebenenfalls g). Das Mischen kann in einer oder mehreren Stufen erfolgen. Bewährt hat sich zum Beispiel ein dreistufiger Mischprozess mit zwei Mischstufen im Innen-mischer und einer abschließenden Mischstufe auf einer Walze (sogenannte "Fertigmischstufe"). Möglich ist auch ein zweistufiger Mischprozess, bei dem die 1. Mischstufe im Innenmischer und die 2. Mischstufe auf einer Walze erfolgt. Ebenso möglich ist ein zweistufiger Mischprozess, bei dem beide Mischstufen in einem Innenmischer erfolgen, wobei die Mischung vor der Zugabe derjenigen Komponenten, die ansonsten üblicherweise auf der Walze zugegeben werden, auf Temperaturen < 120°C, vorzugsweise <110°C abgekühlt wird.

Es hat sich bewährt, die Komponente c) in Form des Füllstoffs vollständig im 1. Mischschritt und auch die Komponente e) in Form des Mikrogels vollständig im 1. Mischschritt oder aber aufgeteilt im 1. und 2. Mischschritt zuzusetzen. Das Silan (Komponente d)) kann ebenfalls entweder vollständig im ersten Mischschritt oder aber aufgeteilt im ersten und zweiten Mischschritt zugesetzt werden.
Die Komponente b) kann in der ersten Mischstufe oder in einer nachgeschalteten Mischstufe, z.B. bei einem dreistufigen Mischprozess in der abschließenden (dritten) Mischstufe bzw. in einem zweistufigen Mischprozess in der zweiten (abschließenden) Mischstufe, z.B. auf einer Walze, zugegeben werden. Bevorzugt ist die Zugabe der Komponente b) in einer nachgeschalteten Mischstufe.

Geeignete Aggregate für die Mischungsherstellung sind an sich bekannt und schließen z.B. Walzen, Innenmischer oder auch Mischextruder ein.

Bei Anwendung eines zweistufigen Mischverfahrens im Innenmischer oder eines dreistufigen Mischverfahrens wie oben angegeben wird in der ersten und/oder in der zweiten, vorzugsweise in der ersten und zweiten Mischstufe bei Temperaturen von 110°C bis 180 °C, vorzugsweise 120°C bis 170°C, besonders bevorzugt 130°C bis 160°C gearbeitet, wobei die Mischzeiten bei diesen Temperaturen im Bereich von 1 bis 15 Minuten liegen und so gewählt werden, dass nicht bereits ein Vulkanisationsstart erfolgt. Die Temperaturen in der o.g. Fertigmischstufe betragen 20 bis 120°C, bevorzugt 50 bis 110 °C.

Üblicherweise erfolgt das Mischen im Innenmischer in einem Temperaturbereich von 20 bis 180°C, bevorzugt im Temperaturbereich 50 bis 160 °C oder auf einer Walze bei weniger als 100 °C. Die Wahl einer geeigneten Temperatur kann der Fachmann gemäß seiner Fachkenntnisse vornehmen, zu beachten ist, dass es beim Mischen einerseits zu einer Silanisierung der Kieselsäure und andrerseits nicht bereits zu einer verfrühten Vulkanisation kommt (Scorching).

### Verfahren zur Herstellung von Vulkanisaten:

Die Vulkanisation der erfindungsgemäßen Zusammensetzungen erfolgt üblicherweise bei einer Temperatur im Bereich von 100 bis 250°C, bevorzugt von 130 bis 180°C, entweder unter Normaldruck (1 bar) oder optional unter einem Druck von bis zu 100 bar. Typischerweise erfolgt diese Vulkanisation im Rahmen eines Formgebungsverfahrens.

Die erfindungsgemäß hergestellten Zusammensetzungen eignen sich zur Herstellung verschiedener Reifenbauteile, insbesondere für Reifenlaufflächen, Subtreads, Karkassen, Seitenwänden, verstärkten Seitenwänden für Notlaufreifen und Apexmischungen sowie auch für die Herstellung von technischen Gummiartikeln wie Dämpfungselementen, Walzenbelägen, Belägen von Förderbändern, Riemen, Spinnkopsen, Dichtungen, Golfballkernen und Schuhsohlen. Besonders geeignet sind die Mischungen für die Herstellung von Reifenlaufflächen, Subtreads, Karkassen und Apexmischungen. Reifen bzw. Reifenteile schließen dabei auch beispielsweise Laufflächen von Sommer-, Winter- und All-Seasons-Reifen sowie Laufflächen von PKW- und LKW-Reifen sowie Reifen für Rennwagen, Motorrad und Fahrrad ein.

### BEISPIELE:

### Herstellung der Komponente b):

Es wurden 476,6 g (Di(2-ethylhexyl)dithiophosphorsäureester) in einem 1 1-Dreihalskolben vorgelegt und auf 10 °C abgekühlt. Im Anschluss wurden über einen Zeitraum von zwei Stunden unter Rühren 191,8 g 1,8-Diaza-bicyclo-(5,4,0)-undec-7-en (DBU) zugegeben, wobei eine Temperatur von 15 °C nicht überschritten wurde. Danach wurde die Mischung langsam auf Raumtemperatur erwärmt und noch eine halbe Stunde nachgerührt. Das Produkt lag als gelb-orange-farbene Lösung mit leichtem Eigengeruch vor.

Das Reaktionsprodukt wurde mittels Elementaranalyse, DSC und IR-Spektrum charakterisiert.

| | |
|---|---|
| P-Gehalt: | 5,99 % |
| N-Gehalt: | 5,31 % |

Zur Demonstration des erfindungsgemäßen Effekts wurden Kautschukmischungen hergestellt, bei denen DPG durch das ***erfindungsgemäße DBU-Salz*** quantitativ ersetzt wurde. Des Weiteren wurde der Zeitpunkt für die Zugabe des ***DBU-Salzes*** bei der Mischungsherstellung variiert.

Die ***Vergleichsbeispiele VV1 und VV2*** sind nicht erfindungsgemäße Vergleichsbeispiele, bei denen Diphenylguanidin (DPG) in Dosierungen von 1,9 und 2,3 phr eingesetzt wurde. Die ***erfindungsgemäßen Beispiele 2, 3, 4, 5, 6, 7*, *8*, *9, 10 und 11*** sind erfindungsgemäße Beispiele, bei denen DPG durch das ***erfindungsgemäße DBU***-***Salz*** vollständig ersetzt wurde. Wie aus nachfolgenden Tabellen ersichtlich, erfolgt der erfindungsgemäße Zusatz des **DBU-Salzes** in den Beispielen entweder in der 1. Mischstufe oder im letzten Mischschritt auf der Walze. Des Weiteren wurde die Menge des ***erfindungsgemäßen DBU***-***Salzes*** variiert (0,25, 0,5, 0,75, 2,3 und 5,5 phr). Im ***erfindungsgemäßen Beispiel 11*** wurden außerdem 20 phr Mikrogel zugesetzt.

Die Kautschukmischungen wurden in einem 3stufigen Mischverfahren hergestellt, wobei in der 1. und 2. Mischstufe ein Innenmischer mit 1,5 1 Innenvolumen (GK 1,5 der Firma Werner & Pfleiderer, Stuttgart) mit ineinandergreifenden Knetelementen (PS 5A -Schaufelgeometrie) eingesetzt wurde. Die letzte Mischstufe erfolgte auf einer Walze.

In **Tabelle 1** sind die Komponenten der jeweiligen Kautschukmischungen angegeben, die in einer ersten Mischstufe in o.g. Innenmischer vermischt wurden. Die in **Tabelle 1** genannte Reihenfolge der Mischungsbestandteile entspricht der Reihenfolge der Zugabe in den Innenmischer. Außerdem sind in **Tabelle 1** die Zeitpunkte für die Zugabe der verschiedenen Komponenten aufgeführt. Nach Zugabe der letzten Komponente (Zinkoxid) wurde der Kneter auf 150°C aufgeheizt und 6 min. bei dieser Temperatur gehalten. Danach wurden die Mischungen aus dem Kneter ausgeworfen und zur Abkühlung auf Temperaturen <100°C kurz auf eine Walze gegeben.

Bei allen Angaben handelt es sich um Gew.-Teile bezogen auf 100 Gew.-Teile Kautschuk (Lösungs-SBR und Polybutadien ohne Öl)

**Tabelle 1: 1. Mischstufe (Innenmischer)**

| | ***Compound Nr***. | ***VV1*** | ***2*** | ***3*** | ***4*** | ***5*** | ***6*** | ***VV2*** | ***7*** | ***8*** | ***9*** | ***10*** | ***11*** |
|---|---|---|---|---|---|---|---|---|---|---|---|---|---|
| **Zugabezeitpunkt: 0 sec**. | | | | | | | | | | | | | |
| **Komponente a)** | **Lösungs-SBR ¹⁾** | 110 | 110 | 110 | 110 | 110 | 110 | 110 | 110 | 110 | 110 | 110 | 110 |
| **Komponente a)** | **Polybutadien ²⁾** | 20 | 20 | 20 | 20 | 20 | 20 | 20 | 20 | 20 | 20 | 20 | 20 |
| **Zugabe nach 30 sec**. | | | | | | | | | | | | | |
| **Komponente c)** | **Kieselsäure ³⁾** | 53 | 53 | 53 | 53 | 53 | 53 | 53 | 53 | 53 | 53 | 53 | 53 |
| **Komponente d)** | **Si75** ^{**4**)} | 6,4 | 6,4 | 6,4 | 6,4 | 6,4 | 6,4 | 6,4 | 6,4 | 6,4 | 6,4 | 6,4 | 6,4 |
| | **Mikrogel⁵⁾** | - | - | - | - | - | - | - | - | - | - | - | 20 |
| **Komponente b*)** | **DPG ⁶⁾** | 2,3 | - | - | - | - | - | 1,9 | - | - | - | - | - |
| **Komponente b)** | **DBU-Salz ⁷⁾** | - | 0,25 | 0,5 | 0,75 | - | - | - | 2,3 | 5,5 | - | - | 0,5 |
| **Komponente g)** | **TMQ ⁸⁾** | 1 | 1 | 1 | 1 | 1 | 1 | 1 | 1 | 1 | 1 | 1 | 1 |
| **Komponente g)** | **6 PPD ⁹⁾** | 1 | 1 | 1 | 1 | 1 | 1 | 1 | 1 | 1 | 1 | 1 | 1 |
| **Komponente g)** | **Stearinsäure ¹⁰⁾** | 1 | 1 | 1 | 1 | 1 | 1 | 1 | 1 | 1 | 1 | 1 | 1 |
| **Zugabe nach 90 sec.** | | | | | | | | | | | | | |
| **Komponente c)** | **Kieselsäure ³⁾** | 27 | 27 | 27 | 27 | 27 | 27 | 27 | 27 | 27 | 27 | 27 | 27 |
| **Komponente c)** | **Ruß ¹¹⁾** | 5 | 5 | 5 | 5 | 5 | 5 | 5 | 5 | 5 | 5 | 5 | 5 |
| **Komponente g)** | **Mineralöl ¹²⁾** | 7,5 | 7,5 | 7,5 | 7,5 | 7,5 | 7,5 | 7,5 | 7,5 | 7,5 | 7,5 | 7,5 | 7,5 |
| **Komponente g)** | **Ozonwachs ¹³⁾** | 1,4 | 1,4 | 1,4 | 1,4 | 1,4 | 1,4 | 1,4 | 1,4 | 1,4 | 1,4 | 1,4 | 1,4 |
| **Zugabe nach 150 sec.** | | | | | | | | | | | | | |
| **Komponente g)** | **Zinkoxid ¹⁴⁾** | 2,5 | 2,5 | 2,5 | 2,5 | 2,5 | 2,5 | 2,5 | 2,5 | 2,5 | 2,5 | 2,5 | 2,5 |
| | Maximale Temperatur [°C] | 150 | 150 | 150 | 150 | 150 | 150 | 150 | 150 | 150 | 150 | 150 | 150 |
| | Zeit bei max. Temperatur [min.] | 6 | 6 | 6 | 6 | 6 | 6 | 6 | 6 | 6 | 6 | 6 | 6 |

| | | | | | | | | | | | | | |
|---|---|---|---|---|---|---|---|---|---|---|---|---|---|
| 1) Buna® VSL 5025-1 HM der ARLANXEO Deutschland GmbH (mit 37,5 phr Mineralöl verstreckt) 2) Buna® CB 25 (Neodym-Polybutadien) der ARLANXEO Deutschland GmbH 3) Ultrasil® VN3 GR der Evonik Industries AG 4) Bis(tri-ethoxy-silylpropyl-monosulfan) (Si 75® der Evonik Industries) 5) Nanoprene® B M15OH VP der ARLANXEO Deutschland GmbH (hydroxyliertes Mikrogel auf Basis Styrol/Butadien mit Tg = -15°C) 6) Vulkacit® D/C der LANXESS Deutschland GmbH 7) Erfindungsgemäßes DBU-Salz 8) 2,2,4-Trimethyl-1,2-dihydrochinonlin, polymerisiert (Vulkanox® HS/LG der LANXESS Deutschland GmbH) 9) N-l,3-Dimethylbutyl-N'-phenyl-p-phenylendiamin (Vulkanox® 4020/LG der LANXESS Deutschland GmbH) 10) Edenor ®C 18 98-100 der Firma BASF SE 11) Corax®N 234 der Evonik Industries AG 12) Tudalen® 1849-1 der Hansen-Rosenthal KG 13) Antilux® 654 der LANXESS Deutschland GmbH 14) Zinkweiss Rotsiegel der Grillo Zinkoxid GmbH | | | | | | | | | | | | | |

Nach 24stündiger Lagerung bei 23°C wurden die Mischungen in einem Innenmischer ohne Zugabe von Mischungskomponenten bei 150°C/6 min redispergiert ("nicht produktive" 2. Mischstufe), ausgeworfen und auf einer auf 40°C vorgewärmten Walze abgekühlt. Die Zugabe der in Tabelle 2 genannten Komponenten erfolgte direkt im Anschluss ohne Zwischenlagerung der Kautschukmischungen bei Temperaturen <90°C auf einer Walze.

An den unvulkanisierten Kautschukmischungen wurden die Mooney-Viskosität ML1+4/100°C sowie die Mooney-Relaxation nach 10 und 30 sec bestimmt (ASTM D1646) (siehe **Tabelle 3**).

**Tabelle 2: Abschließende Mischstufe (Walze)**

| | ***Compound Nr***. | ***VV1*** | ***2*** | ***3*** | ***4*** | ***5*** | ***6*** | ***VV2*** | ***7*** | ***8*** | ***9*** | ***10*** | ***11*** |
|---|---|---|---|---|---|---|---|---|---|---|---|---|---|
| **Komponente f)** | **Schwefel ¹⁵⁾** | 1,9 | 1,9 | 1,9 | 1,9 | 1,9 | 1,9 | 1,9 | 1,9 | 1,9 | 1,9 | 1,9 | 1,9 |
| **Komponente f)** | **CBS ¹⁶⁾** | 1,9 | 1,9 | 1,9 | 1,9 | 1,9 | 1,9 | 1,9 | 1,9 | 1,9 | 1,9 | 1,9 | 1,9 |
| **Komponente b)** | **DBU-Salz ⁷⁾** | - | - | - | - | 0,25 | 0,5 | - | - | - | 2,3 | 5,5 | - |
| | Maximale Temperatur [°C] | < 90 | < 90 | <90 | <90 | < 90 | < 90 | <90 | <90 | <90 | < 90 | < 90 | <90 |

| | | | | | | | | | | | | | |
|---|---|---|---|---|---|---|---|---|---|---|---|---|---|
| 15) Löslicher Schwefel (Mahlschwefel 90/95° Chancel® der Firma Solvay Barium Strontium) 16) N-Cyclohexyl-2-benzthiazylsulfenamid (Vulkanox®CZ/C de Lanxess Deutschland GmbH) | | | | | | | | | | | | | |

**Tabelle 3: Mischungseigenschaften**

| ***Compound Nr.*** | ***VV1*** | ***2*** | ***3*** | ***4*** | ***5*** | ***6*** | ***VV2*** | ***7*** | ***8*** | ***9*** | ***10*** | ***11*** |
|---|---|---|---|---|---|---|---|---|---|---|---|---|
| ML 1+4 (100°C) [ME] | 82,3 | 83,1 | 82,7 | 83,7 | 87,6 | 89,3 | 83,1 | 87,8 | 88,8 | 85,8 | 75 | 94,34 |
| Mooney Relaxation /10 sec. [%] | 26,6 | 26,6 | 26,6 | 27,1 | 28,9 | 29,4 | 26,2 | 30,4 | 32,8 | 28,0 | 24,6 | 28,1 |
| Mooney Relaxation /30 sec. [%] | 19,6 | 20,2 | 20,1 | 20,5 | 22,4 | 22,9 | 19,2 | 23,4 | 25,5 | 21,5 | 18,0 | 21,4 |

Die ***erfindungsgemäßen Mischungen 2, 3 und 4,*** bei denen die Einmischung des DBU-Salzes in Mengen von 0,25 phr, 0,5 phr und 0,75 phr im 1. Mischschritt erfolgte, weisen im Vergleich mit den ***nicht erfindungsgemäßen Vergleichsmischungen VV1 und VV2*** nahezu identische Mischungsviskositäten (ML 1+4/100°C) und Mooneyrelxationen (nach 10 und nach 30 sec.) auf. Dies kann als Hinweis dafür genommen werden, dass die Verarbeitbarkeit der ***erfindungsgemäßen Mischungen 2, 3 und 4*** vergleichbar mit der der DPG-haltigen ***Vergleichsmischungen VV1 und W2*** ist. Bei einer Dosierung von 5,5 phr des DBU-Salzes im letzten Mischschritt auf der Walze (***erfindungsgemäßes Beispiel 10***) werden niedrigere Mooneywerte und niedrigere Mooneyrelaxationen als bei den ***Referenzcompounds VV1 und VV2*** gefunden. Dies ist ein Hinweis auf eine gute Verarbeitbarkeit der ***erfindungsgemäßen Mischung 10***.

Das Vulkanisationsverhalten der Mischungen wird im Rheometer bei 160°C nach DIN 53 529 mit Hilfe des Monsantorheometers MDR 2000E untersucht. Auf diese Weise wurden charakteristische Daten wie Fₐ, Fₘₐₓ, F_{max.}-Fₐ, t₁₀, t₅₀, t₉₀ und t₉₅ bestimmt (siehe **Tabelle 4**).

**Nach DIN 53 529, Teil 3 bedeuten:**

| | |
|---|---|
| Fₐ: | Vulkameteranzeige im Minimum der Vernetzungsisotherme |
| Fₘₐₓ: | Maximum der Vulkameteranzeige |
| Fₘₐₓ - Fₐ: | Differenz der Vulkameteranzeigen zwischen Maximum und Minimum |
| t₁₀: | Zeit, bei der 10% des Umsatzes erreicht sind |
| t₅₀: | Zeit, bei der 50% des Umsatzes erreicht sind |
| t₉₀: | Zeit, bei der 90% des Umsatzes erreicht sind |
| t₉₅: | Zeit, bei der 95% des Umsatzes erreicht sind |

Bei den ***erfindungsgemäßen Beispielen 2, 3, 4, 5, 6, 7, 8***, ***9 und 10*** nehmen mit steigender Dosierung des DBU-Salzes die Differenzen der Drehmomente (Fₘₐₓ - Fₐ) sowie die Vulkanisationsgeschwindigkeiten (abnehmende t₉₀-t₁₀ -Werte) zu. Insbesondere das hohe Niveau der Drehmomentsdifferenzen (Fₘₐₓ - Fₐ) ist ein starker Hinweis für die hohe Vernetzungseffizienz des DBU-Salzes. Aufgrund der hohen Drehmomentdifferenz bietet das DBU-Salzes über eine Mengenoptimierung und über eine Optimierung der Vulkanisationstemperatur Möglichkeiten zur Anpassung der Anvulkanisationszeit und der Vulkanisationsgeschwindigkeit ohne Einbussen bei der Vernetzungsdichte d. h. ohne Einbußen von Vulkanisateigenschaften, die mit der Vernetzungsdichte zusammenhängen (z.B. Modulniveau).

Der Zusatz von Mikrogel (***erfindungsgemäßes Beispiel 11***) führt bei derselben Dosierung (0,5 phr) des DBU-Salzes (***Vergleich mit erfindungsgemäßem Beispiel 3***) zu einer Verbesserung der Verarbeitungssicherheit (t₁₀), zu einer Erhöhung der Vulkanisationsgeschwindigkeit (t₉₀-t₁₀) sowie zu einer Reduktion der Drehmomentsdifferenz (Fₘₐₓ - Fₐ).

Die für die Vulkanisatcharakterisierung notwendigen Prüfkörper wurden durch Pressenvulkanisation der Mischungen bei einem Hydraulikdruck von 120 bar erhalten. Die für die Herstellung der Prüfkörper angewandten Vulkanisationsbedingungen sind in **Tabelle 5** zusammengefasst.

Die Eigenschaften aller Vulkanisate, d.h. sowohl der nicht erfindungsgemäßen ***Vergleichsversuche VV1***, ***VV2*** als auch der ***erfindungsgemäßen Beispiele 2, 3, 4, 5, 6, 7, 8, 9, 10 und 11*** sind in **Tabelle 6** zusammengefasst.

**Tabelle 4: Vulkameterprüfung**

| ***Compound Nr.*** | ***VV1*** | ***2*** | ***3*** | ***4*** | ***5*** | ***6*** | ***VV2*** | ***7*** | ***8*** | ***9*** | ***10*** | ***11*** |
|---|---|---|---|---|---|---|---|---|---|---|---|---|
| F_{min.} [dNm] | 3,4 | 3,7 | 3,6 | 3,6 | 3,9 | 4,0 | 3,4 | 3,7 | 3,5 | 3,6 | 3,1 | 5,00 |
| Fₘₐₓ [dNm] | 17,4 | 18,6 | 19,6 | 20,4 | 19,8 | 20,9 | 17,0 | 20,7 | 20,7 | 22,5 | 20,5 | 18,72 |
| Fₘₐₓ - Fₐ [dNm] | 14,0 | 14,9 | 16,0 | 16,8 | 15,9 | 16,9 | 13,6 | 17,0 | 17,2 | 18,9 | 17,4 | 13,72 |
| t₁₀ [sec] | 185 | 167 | 171 | 177 | 190 | 162 | 219 | 126 | 56 | 63 | 47 | 206 |
| t₅₀ [sec] | 330 | 505 | 433 | 376 | 367 | 288 | 455 | 192 | 87 | 110 | 82 | 495 |
| t₉₀ [sec] | 925 | 1161 | 966 | 820 | 974 | 835 | 1039 | 401 | 211 | 378 | 292 | 939 |
| t₉₅ [sec] | 1235 | 1420 | 1268 | 1135 | 1295 | 1180 | 1318 | 613 | 355 | 755 | 485 | 1214 |
| t₉₀-t₁₀ [sec] | 740 | 994 | 795 | 643 | 784 | 673 | 820 | 275 | 155 | 315 | 245 | 733 |

**Tabelle 5: Vulkanisationsbedingungen**

| ***Compound Nr.*** | ***VV1*** | ***2*** | ***3*** | ***4*** | ***5*** | ***6*** | ***VV2*** | ***7*** | ***8*** | ***9*** | ***10*** | ***11*** |
|---|---|---|---|---|---|---|---|---|---|---|---|---|
| Temperatur [°C] | 160 | 160 | 160 | 160 | 160 | 160 | 160 | 160 | 160 | 160 | 160 | 160 |
| Zeit [min.] | 37 | 37 | 37 | 37 | 37 | 37 | 36 | 26 | 21 | 28 | 24 | 37 |

**Tabelle 6: Vulkanisateigenschaften**

| ***Compound Nr***. | ***VV1*** | ***2*** | ***3*** | ***4*** | ***5*** | ***6*** | ***VV2*** | ***7*** | ***8*** | ***9*** | ***10*** | ***11*** |
|---|---|---|---|---|---|---|---|---|---|---|---|---|
| Shore A-Härte bei 23°C (DIN 53505) | 61,9 | 65,2 | 66,6 | 65,8 | 65,0 | 67 | 63,6 | 66,6 | 66,9 | 68,7 | 68,3 | 64,5 |
| Shore A Härte bei 70°C (DIN 53505) | 58,5 | 59,5 | 61 | 61,5 | 61 | 63 | - | - | - | - | - | 60,5 |
| Rückprallelastizität/0°C ("R0") (DIN 53512) [%] | 7,0 | 8,5 | 8,0 | 7,5 | 7,5 | 7,5 | 7 | 7 | 7 | 7 | 7 | 8,5 |
| Rückprallelastizität/23°C ("R23") (DIN 53512) [%] | 27 | 25 | 25 | 26 | 25 | 26 | 25 | 27 | 30 | 26 | 27 | 23 |
| Rückprallelastizität/70°C ("R70") (DIN 53512) [%] | 58 | 56 | 56 | 58 | 56 | 57 | 59 | 64 | 70 | 63 | 64 | 58 |
| Rückprallelastizität/100°C (DIN 53512) [%] | 63,7 | 61,7 | 61,2 | 63,7 | 63,0 | 64,0 | - | - | - | - | - | 64,5 |
| Delta "R70"-"R23" | 31 | 31 | 31 | 32 | 31 | 31 | 34 | 37 | 40 | 37 | 37 | 35 |
| σ₁₀ (DIN 53504) [MPa] | 0,5 | 0,6 | 0,6 | 0,6 | 0,6 | 0,6 | 0,5 | 0,6 | 0,6 | 0,7 | 0,6 | 0,5 |
| σ₂₅ (DIN 53504) [MPa] | 0,9 | 1,1 | 1,0 | 0,9 | 0,9 | 0,9 | 0,9 | 1,0 | 1,0 | 1,1 | 1,1 | 0,93 |
| σ₅₀ (DIN 53504) [MPa] | 1,4 | 1,5 | 1,4 | 1,4 | 1,4 | 1,4 | 1,3 | 1,6 | 1,7 | 1,8 | 1,6 | 1,4 |
| σ₁₀₀ (DIN 53504) [MPa] | 2,6 | 2,5 | 2,4 | 2,6 | 2,3 | 2,6 | 2,4 | 3,1 | 3,8 | 3,5 | 3,3 | 2,5 |
| σ₂₀₀ (DIN 53504) [MPa] | 6,7 | 5,8 | 6,2 | 7,0 | 6,0 | 6,9 | 6,5 | 9,1 | 11,6 | 9,5 | 9,1 | 7,1 |
| σ₃₀₀ (DIN 53504) [MPa] | 13,1 | 10,9 | 12,1 | 13,5 | 11,7 | 13,5 | 12,9 | 17,3 | - | 17,4 | 16,8 | 13,7 |
| σ₃₀₀/σ₂₀ | 7,4 | 5,3 | 6,2 | 7,8 | 6,7 | 7,7 | 7,2 | 9,1 | 11,6 | 8,6 | 8,3 | 7,6 |
| Zugfestigkeit (DIN 53504) [MPa] | 18,9 | 20,2 | 21,4 | 20,8 | 21,4 | 23,0 | 20,8 | 18,8 | 17,8 | 16,9 | 18,7 | 20,2 |
| Bruchdehnung (DIN 53504) [MPa] | 385 | 450 | 448 | 402 | 443 | 436 | 393 | 321 | 264 | 293 | 325 | 399 |
| Abrieb (DIN 53516) [mm³] | 109 | 105 | 108 | 106 | 104 | 98 | 98 | 93 | 86 | 82 | 80 | 100 |

Bei den Vulkanisateigenschaften zeichnen sich die erfindungsgemäßen Beispiele durch eine vergleichbare oder höhere Differenz der Rückprallelastizitäten bei 70°C und 23°C (Delta "R70"-"R23") als die entsprechenden ***Vergleichsversuche VV1 und VV2*** aus. Dies ist ein Hinweis auf eine gute Rollwiderstands/Nassrutschfestigkeitsrelation von Reifenlaufflächen.

Das Niveau der Modulwerte (σ₁₀₀, σ₂₀₀ und σ₃₀₀) sowie der Verstärkungsfaktor (σ₂₀₀/σ₂₅) nehmen mit steigenden Mengen an DBU-Salz zu (***erfindungsgemäße Beispiele 4, 7*, *8*, *9 und 10*** und weisen ab Dosierungen des DBU-Salzes ≥ 0,75 (Einmischung im 1. Mischschritt) höhere Werte auf als die Vergleichsbeispiele ***VV1 und VV2**.* Besonders vorteilhaft ist eine Dosierung des DBU-Salzes im letzten Mischschritt (***Vergleich der erfindungsgemäßen Beispiele 3 und 6*** bei einer DBU-Menge 0,5 phr).

Der DIN-Abrieb der ***erfindungsgemäßen Beispiele 2, 3, 4, 5, und 6*** ist vergleichbar mit dem der ***Vergleichsbeispiele VV1 und VV2**.* ***Bei den erfindungsgemäßen Beispielen 7, 8*, *9 und 10*** ist der DIN-Abrieb signifikant niedriger als bei den ***Vergleichsbeispielen VV1 und VV2**.*

Der Zusatz von Mikrogel (***erfindungsgemäßes Beispiel 11***) führt bei derselben Dosierung (0,5 phr) des DBU-Salzes (***Vergleich mit erfindungsgemäßem Beispiel 3***) zu einer Verbesserung der Differenz der Rückprallelastizitäten bei 70°C und 23°C (Delta "R70"-"R23") sowie zu einer Verbesserung des Modulniveaus (σ₁₀₀, σ₂₀₀ und σ₃₀₀) und des Verstärkungsfaktor (σ₂₀₀/σ₂₅) und des DIN-Abriebs. Zusammenfassend lässt sich sagen, dass das Niveau der Vulkanisateigenschaften des ***erfindungsgemäßen Beispiels 11*** gegenüber dem Niveau der ***Vergleichsbeispiele VV2 und VV2*** verbessert wird.

### Dynamische Beanspruchung im Goodrich Flexometer:

Die Temperaturerhöhung bei dynamischer Beanspruchung sowie die bleibende Verformung (Goodrich-Flexometer nach DIN 53533) nehmen bei den ***erfindungsgemäßen Beispielen** 2, **3, 4, 7 und 8*** mit steigender Dosierung des DBU-Salzes ab, wobei bei Dosierungen des DBU-Salzes von 0,25 und 0,5 phr die Zumischung im letzten Mischschritt zu besseren Ergebnissen als eine Zugabe im 1. Mischschritt führt *(**Vergleich der erfindungsgemäßen Beispielen 2 und 5 sowie 3 und 6**).* Eine Reduktion der Temperaturerhöhung und der bleibenden Verformung im Goodrich-Flexometer sind ein Indiz für eine höhere Lebensdauer erfindungsgemäß hergestellter dickwandiger Vulkanisate bei dynamischer Belastung. Der Zusatz von Mikrogel (***erfindungsgemäßes Beispiel 11***) führt bei derselben Dosierung (0,5 phr) des DBU-Salzes (***Vergleich mit erfindungsgemäßem Beispiel 3***) zu einer marginalen Verschlechterung der Temperaturerhöhung sowie zu einer geringfügigen Verbesserung der bleibenden Verformung.

### Dynamische Eigenschaften im Eplexor-Test*:

Bei dynamischer Beanspruchung im Eplexor-Test wird gezeigt, dass die tan δ-Differenz zwischen 0°C und 60°C (tan δ (0°C) - tan δ (60°C)) mit steigernder Dosierung des DBU-Salzes (***erfindungsgemäßen Beispiele 2, 3, 4, 7 und 8***) zunimmt, wenn das DBU-Salz im 1. Mischschritt dosiert wird. Bei gleicher Dosierung des DBU-Salzes werden bei einer Einmischung in der letzten Mischstufe jeweils bessere Ergebnisse als bei einer Zugabe im 1. Mischschritt erzielt (Vergleich der ***erfindungsgemäßen Beispiele 2 und 5 sowie 3 und 6***). Die höhere Differenz der tan δ-Werte zwischen 0°C und 60°C (tan δ (0°C) - tan δ (60°C)) ist ein Hinweis auf eine Verbesserung der Füllstoffverteilung durch Verbesserung der Kieselsäureaktivierung und auf eine Verbesserung der Nassrutschfestigkeit / Rollwiderstand-Relation von Reifenlaufflächen. Der Zusatz von Mikrogel (***erfindungsgemäßes Beispiel 11***) führt bei derselben Dosierung (0,5 phr) des DBU-Salzes (***Vergleich mit erfindungsgemäßem Beispiel 3***) zu einer Verbesserung der tan δ-Differenz zwischen 0°C und 60°C (tan δ (0°C) - tan δ (60°C)).

**Zusammenfassend** kann festgestellt werden, dass eine Substitution von DPG durch das erfindungsgemäße DBU-Salz gelingt. Für eine vollständige Substitution von 1,9 bzw. 2,3 phr DPG sind DBU-Salze in Mengen von 0,75 bis 1,8, vorzugsweise 1,0 bis 1,5 phr bevorzugt. Vorzugsweise wird das DBU-Salz nicht in der 1. Mischstufe sondern in einer nachgeschalteten Mischstufe zugegeben (Unterschied zu DPG). Durch den Zusatz von Mikrogel gelingt eine Verbesserung des Vulkanisationsverhaltens und der Vulkanisateigenschaften.

**Tabelle 7: Goodrich-Flexometer (Messung bei 100°C, Vorspannung: 1,0 MPa; Messzeit: 25 min.; Hub: 4 mm)**

| ***Compound Nr***. | ***VV1*** | ***2*** | ***3*** | ***4*** | ***5*** | ***6*** | ***VV2*** | ***7*** | ***8*** | ***9*** | ***10*** | ***11*** |
|---|---|---|---|---|---|---|---|---|---|---|---|---|
| Temperaturerhöhung [°C] | 16,0 | 20,3 | 16,3 | 16,2 | 16,7 | 16,0 | 18,3 | 14,1 | 11,6 | 14,2 | 12,8 | 16,8 |
| Bleibende Verformung [%] | 3,5 | 7,1 | 4,4 | 3,6 | 4,4 | 3,2 | 5,2 | 2,8 | 2,4 | 2,8 | 2,8 | 3,6 |

**Tabelle 8: Dynamische Eigenschaften / Eplexor-Test*(Prüffrequenz: 10,0 Hz; Heizrate 1K/min; Starttemperatur: -100°C; Endtemperatur: 100°C)**

| ***Compound Nr***. | ***VV1*** | ***2*** | ***3*** | ***4*** | ***5*** | ***6*** | ***VV2*** | ***7*** | ***8*** | ***9*** | ***10*** | ***11*** |
|---|---|---|---|---|---|---|---|---|---|---|---|---|
| E' (0°C) / 10 Hz [MPa] | 39,16 | 53,93 | 47,98 | 45,21 | 46,04 | 47,28 | 37,02 | 36,18 | 28,35 | 44,37 | 42,62 | 61,7 |
| E"(0°C) / 10 Hz [MPa] | 18,20 | 19,58 | 20,11 | 20,46 | 20,41 | 21,38 | 17,79 | 17,8 | 15,08 | 19,99 | 20,44 | 28,55 |
| tan δ (0°C) / 10 Hz | 0,465 | 0,363 | 0,428 | 0,452 | 0,443 | 0,452 | 0,480 | 0,492 | 0,532 | 0,450 | 0,480 | 0,463 |
| E' (60°C) /10 Hz [MPa] | 8,24 | 12,26 | 10,09 | 10,19 | 10,17 | 9,82 | 7,28 | 8,45 | 7,48 | 10,63 | 10,15 | 8,03 |
| E"(60°C) / 10 Hz [MPa] | 0,93 | 1,53 | 1,26 | 1,15 | 1,22 | 1,15 | 0,77 | 0,77 | 0,55 | 0,99 | 0,95 | 0,92 |
| tan δ (60°C) / 10 Hz | 0,113 | 0,125 | 0,125 | 0,113 | 0,12 | 0,118 | 0,106 | 0,091 | 0,074 | 0,093 | 0,093 | 0,115 |
| tan δ (0°C) - tan δ (60°C) | 0,352 | 0,238 | 0,303 | 0,339 | 0,323 | 0,334 | 0,374 | 0,401 | 0,458 | 0,357 | 0,387 | 0,348 |

| | | | | | | | | | | | | |
|---|---|---|---|---|---|---|---|---|---|---|---|---|
| * Eplexor 500 N (Gabo-Testanlagen GmbH, Ahlden, Deutschland) | | | | | | | | | | | | |

## Patentansprüche

**1.** Vulkanisierbare Kautschukmischungen enthaltend
a) mindestens einen doppelbindungshaltigen Kautschuk, und
b) mindestens ein Dithiophosphorsäuresalz eines bi- oder polycyclischen Amins.

**2.** Vulkanisierbare Kautschukmischungen nach Anspruch 1, wobei die Kautschukmischung zusätzlich
c) mindestens einen Füllstoff, und
d) mindestens ein Silan
enthält.

**3.** Vulkanisierbare Kautschukmischungen nach Anspruch 1 oder 2, wobei die Kautschukmischung zusätzlich
e) mindestens ein Mikrogel
enthält.

**4.** Vulkanisierbare Kautschukmischungen nach einem der Ansprüche 1 bis 3, wobei mindestens ein doppelbindungshaltiger Kautschuk a) ausgewählt aus der Gruppe bestehend aus NR (Naturkautschuk), EPDM (Ethylen-Propylen-Dien Kautschuk), SBR (Vinylaromat/DienKautschuk), BR (Polybutadienkautschuk), IR (Polyisopren), SIBR (Styrol/Isopren/Butadien-Kautschuk), BIR (Butadien/Isopren-Kautschuk), IIR (Butylkautschuk, d.h. Isobuten/Isopren-Kautschuk), XIIR (Halobutylkautschuk, insbesondere Chlor- oder Brombutylkautschuk), NBR (Nitrilkautschuk), XNBR (carboxylierter Butadien/Acrylnitril-Kautschuk), SNBR (Styrol/ Butadien/Acrylnitril-Kautschuk), XSBR (carboxylierter Styrol/Butadien-Kautschuk), CR (Polychloropren) und ENR (epoxydierter Naturkautschuk) eingesetzt wird.

**5.** Vulkanisierbare Kautschukmischungen nach einem der Ansprüche 1 bis 4, wobei als Dithiophosphorsäuresalz eines bi- oder polycyclischen Amins b) ein Dithiophosphorsäuresalz eines bi- oder polycyclischen Amins der allgemeinen Formel (I) oder (II) eingesetzt wird, 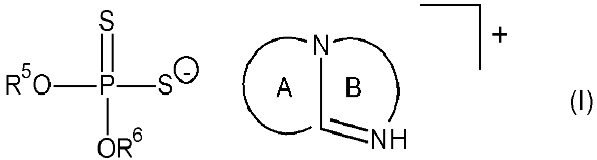 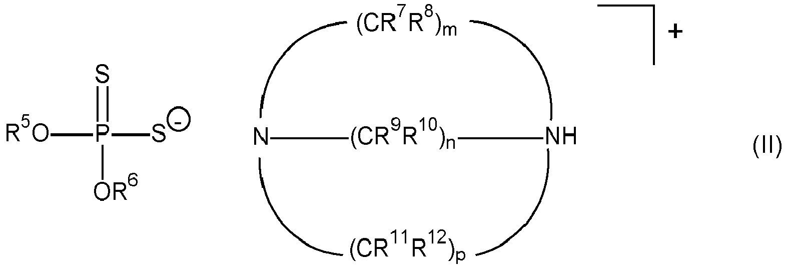 worin
R⁵ und R⁶ gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
A für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten 5 bis 7 gliedrigen heterocyclischen Ring, der 1 oder 2 N-Atome aufweist;
B für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten, eine Doppelbindung aufweisenden, 5 bis 6 gliedrigen heterocyclischen Ring, der 2 N-Atome aufweist;
R⁷, R⁸, R⁹, R¹⁰, R¹¹ und R¹² gleich oder verschieden sind und für H oder aliphatische Reste mit 1 bis 4 Kohlenstoffatomen stehen, bevorzugt H, und
m, n und p gleich oder verschieden sind und 1, 2, 3 oder 4, bevorzugt 1 oder 2, besonders bevorzugt 2 bedeuten.

**6.** Vulkanisierbare Kautschukmischungen nach Anspruch 5, wobei als Komponente b) mindestens eine Verbindung der Formel (I-a), (I-b), (I-c), (I-d) oder (II-a) eingesetzt wird,

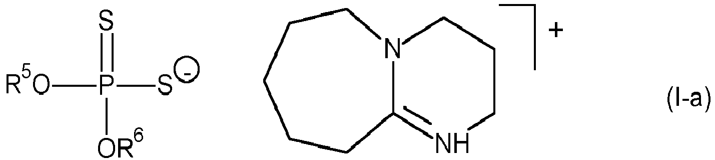

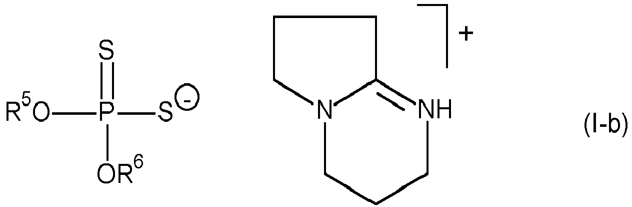

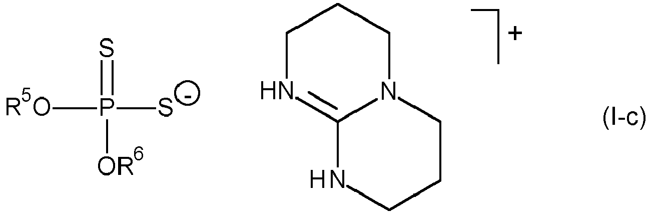

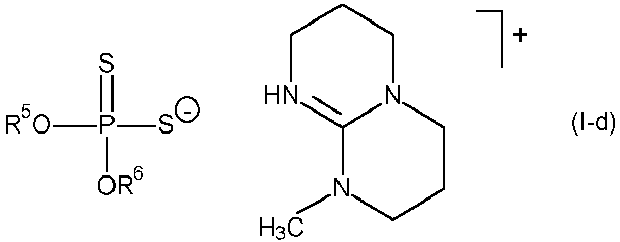

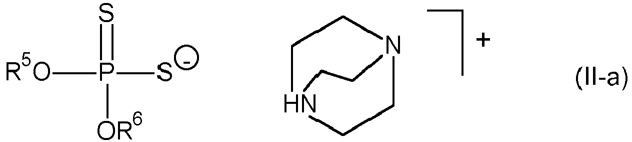

**7.** Vulkanisierbare Kautschukmischungen nach einem der Ansprüche 1 bis 6, wobei als Füllstoff c) Kieselsäure, bevorzugt pyrogene Kieselsäure oder Fällungskieselsäure, oder Aluminiumoxid oder Gemische davon eingesetzt werden.

**8.** Vulkanisierbare Kautschukmischungen nach einem der Ansprüche 1 bis 7, wobei als Silan d) eine Verbindung der allgemeinen Strukturformel (V) oder (VI) eingesetzt wird 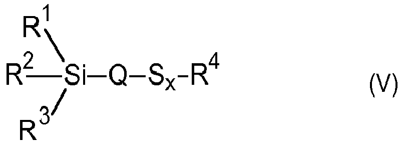 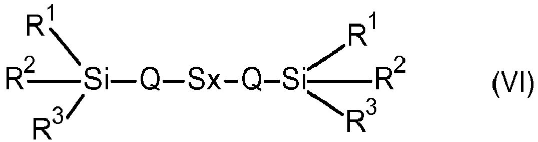 worin
x im Mittel 1 bis 10, bevorzugt 1 bis 6 sein kann,
R¹, R² und R³ gleiche oder verschiedene Alkoxygruppen, bevorzugt gleiche oder verschiedene C₁-C₁₀-Alkoxygruppen, bedeuten,
Q eine Spacergruppe darstellt, bevorzugt auf der Basis von aliphatischen, heteroaliphatischen, aromatischen oder heteroaromatischen Kohlenstoffketten mit 1 bis 20 Kohlenstoffatomen, bevorzugt 1 bis 10 Kohlenstoffatomen, und optional 1 bis 3 Heteroatomen, insbesondere Sauerstoff, Schwefel oder Stickstoff,
R⁴ Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest darstellt mit nachfolgenden Strukturen: 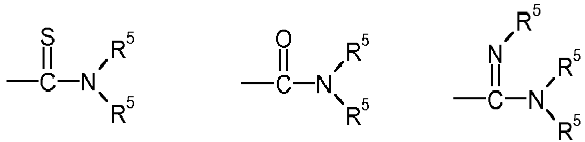 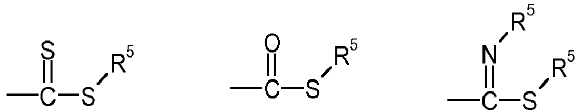 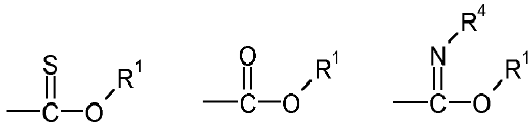 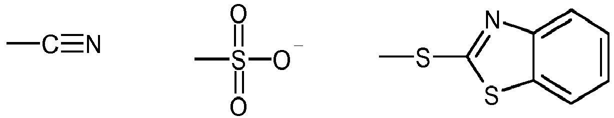 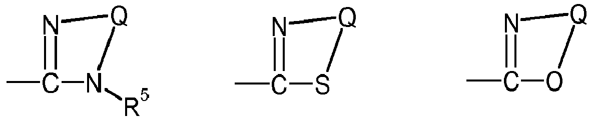 worin R⁵ für einen aliphatischen, heteroaliphatischen, cycloaliphatischen, aromatischen oder heteroaromatischen Rest mit 1 bis 20, bevorzugt 1 bis 10, Kohlenstoffatomen und 1 bis 3 Heteroatomen, wie Sauerstoff, Stickstoff oder Schwefel steht.

**9.** Vulkanisierbare Kautschukmischungen nach einem der Ansprüche 1 bis 8, wobei die Komponente e) ein hydroxylgruppenhaltiges Mikrogel ist.

**10.** Vulkanisierbare Kautschukmischungen nach Anspruch 9, wobei das hydroxylgruppenhaltige Mikrogel e) ein hydroxylgruppenhaltiges Mikrogel mit Wiederholungseinheiten mindestens eines hydroxyl-gruppenhaltigen Monomers (D) und mindestens eines vernetzenden Monomers (C) und mindestens eines konjugierten Diens (A) und/oder mindestens eines vinylaromatischen Monomers (B) ist.

**11.** Vulkanisierbare Kautschukmischungen nach einem der Ansprüche 1 bis 10 enthaltend
a) mindestens einen doppelbindungshaltigen Kautschuk,
b) mindestens ein Dithiophosphorsäuresalz eines bi- oder polycyclischen Amins der Formel (I-a), (I-b), (I-c), (I-d) oder (II-a), 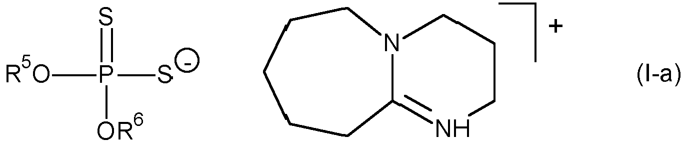 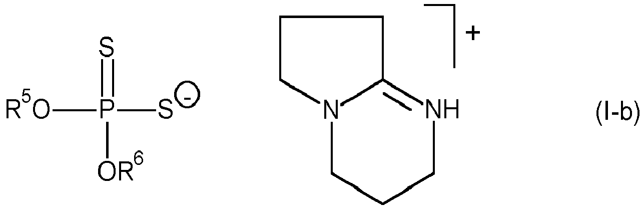 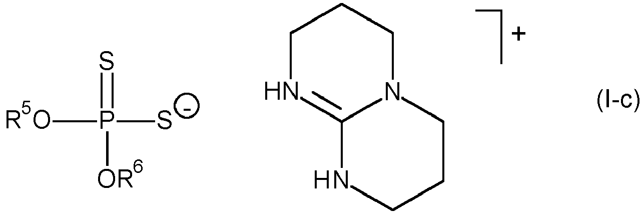 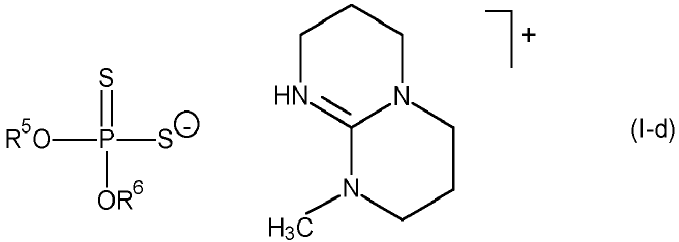 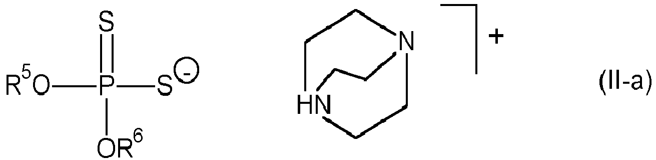
c) mindestens einen Füllstoff,
d) mindestens ein Silan, und
e) mindestens ein Microgel.

**12.** Vulkanisierbare Kautschukmischung nach einem der Ansprüche 1 bis 11 enthaltend
a) mindestens einen Kautschuk ausgewählt aus der Gruppe bestehend aus NR (Naturkautschuk), SBR (Vinylaromat/Dien-Kautschuke), BR (Polybutadienkautschuk), IR (Polyisopren), IBR (Isopren/Butadien-Kautschuk), IIR (Isobuten/Isopren-Kautschuk), BIR (Butadien/Isopren-Kautschuk), SIBR (Styrol/Isopren-Kautschuk) und Mischungen daraus,
b) mindestens ein Dithiophosphorsäuresalz eines bi- oder polycyclischen Amins der Formel (I-a), (I-b), (I-c), (I-d) oder (II-a), 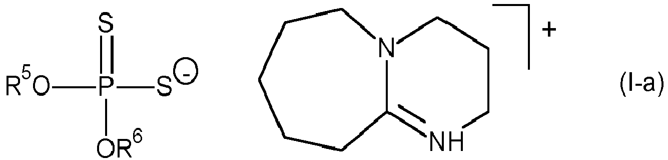 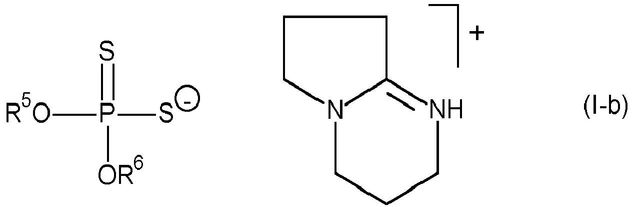 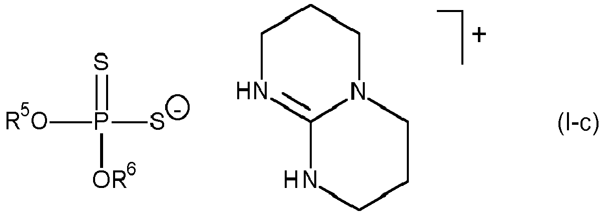 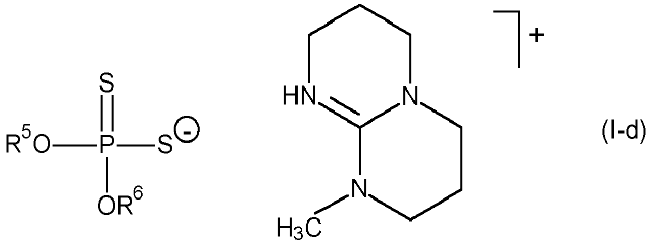 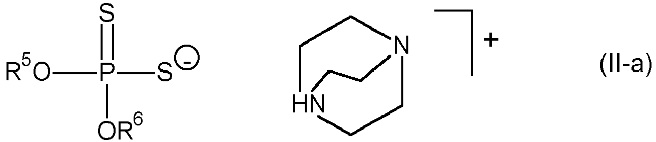
c) Kieselsäure als Füllstoff,
d) mindestens einem Bis(triethoxysilylpropyl)polysulfan der folgenden Strukturformel (VII) mit n= 2 oder 4 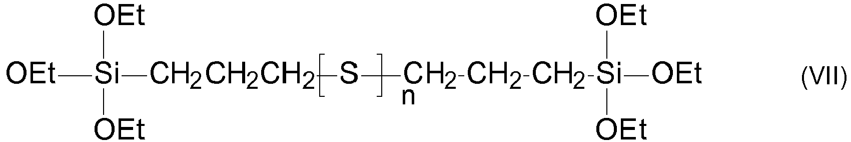
e) mindestens ein hydroxygruppenhaltiges Mikrogel ausgewählt aus der Gruppe bestehend aus Mikrogelen auf Basis der Monomere Butadien, Trimethylolpropantrimethacrylat und Hydroxyethylmethacrylat, Mikrogelen auf Basis der Monomere Butadien, Styrol, Trimethylolpropantrimethacrylat und Hydroxyethylmethacrylat und Mikrogelen auf Basis der Monomere Styrol, Trimethylolpropantrimethacrylat und Hydroxyethylmethacrylat, wobei diese Mikrogele besonders bevorzugt (i) eine Glastemperatur im Bereich von -78 °C bis 150 °C, insbesondere von -78 °C bis 125 °C, (ii) einen Quellungsindex von weniger als 30, insbesondere weniger als 25, ganz besonders bevorzugt weniger als 20 und (iii) einen Gehalt einpolymerisierter hydroxylhaltiger Monomerer von größer als 0,1 Gew.-% mit Hydroxylzahlen größer als 0,5 aufweisen,

**13.** Vulkanisierbare Kautschukmischung nach einem der Ansprüche 1 bis 12, wobei die Kautschukmischung zusätzlich
f) Schwefel und/oder mindestens einen Schwefelspender
enthält.

**14.** Vulkanisierbare Kautschukmischungen nach einem der Ansprüche 1 bis 13 zusätzlich enthaltend ein oder mehrere Komponenten g) in Form von Kautschukadditiven ungleich den Komponenten b) - f), bevorzugt ausgewählt aus der Gruppe bestehend aus Vulkanisationsbeschleunigern, Zinkoxid und Stearinsäure oder Zinkstearat, Alterungsschutzmitteln, Reversionsschutzmitteln, Lichtschutzmitteln, Ozonschutzmitteln, Verarbeitungshilfsmitteln, Weichmachern, Mineralölen, Tackifiern, Treibmitteln, Farbstoffen, Pigmenten, Wachsen, Harzen, Streckmitteln, organische Säuren, Vulkanisationsverzögerern, Metalloxiden, sowie Füllstoffaktivatoren.

**16.** Vulkanisierbare Kautschukmischung nach einem der Ansprüche 1 bis 14 enthaltend
a) mindestens einen doppelbindungshaltigen Kautschuk,
b) 0,1 bis 6,0 Gew.-Teile, vorzugsweise 0,2 bis 5,5 Gew.-Teile, besonders bevorzugt 0,4 bis 2,2 Gew.-Teile und insbesondere 0,5 bis 2,0 Gew.-Teile, mindestens eines Dithiophosphorsäuresalzes eines bi- oder polycyclischen Amins,
c) größer 0 bis 300 Gew.-Teile, bevorzugt 5 bis 200 Gew.-Teile, besonders bevorzugt 10 bis 150 Gew.-Teile, ganz besonders bevorzugt von 20 bis 130 Gew.-Teile mindestens eines Füllstoffs,
d) größer 0 bis 12 Gew.-Teile, bevorzugt von 0,2 bis 11 Gew.-Teile mindestens eines Silans,
e) 0 bis 12 Gew.-Teile, bevorzugt größer 0 bis 12 Gew.-Teile, besonders bevorzugt 0,2 bis 11 Gew.-Teile mindestens eines Mikrogels,
f) 0 bis 15 Gew.-Teile, bevorzugt größer 0 bis 15 Gew.-Teile, besonders bevorzugt 0,1-10 Gew.-Teile Schwefel und/oder mindestens einen Schwefelspender,
g) 0 bis 50 Gew.-Teile, vorzugsweise 0,1 bis 45 Gew.-Teile, besonders bevorzugt 1,0 bis 40 Gew.-Teile, ganz besonders bevorzugt 1,5 bis 30 Gew.-Teile eines oder mehrerer weiterer Kautschukadditive,
wobei alle vorgenannten Gew.-Teil Angaben für die Komponenten b) bis g) jeweils auf 100 Gewichtsteile der Kautschukkomponente(n) a) bezogen sind.

**17.** Verfahren zur Herstellung von vulkanisierbaren Kautschukmischungen nach einem der Ansprüche 1 bis 15, **dadurch gekennzeichnet, dass** man die Komponenten a) und b) und gegebenenfalls c), gegebenenfalls d), gegebenenfalls e), gegebenenfalls f) und gegebenenfalls g) in einer oder mehreren Stufen miteinander mischt, bevorzugt entweder durch einen dreistufigen Mischprozess mit zwei Mischstufen in einem Innenmischer und einer abschließenden Mischstufe auf einer Walze, oder durch einen zweistufigen Mischprozess, bei dem die 1. Mischstufe in einem Innenmischer und die 2. Mischstufe auf einer Walze erfolgt, oder durch einen zweistufigen Mischprozess, bei dem beide Mischstufen in einem Innenmischer erfolgen, wobei die Mischung vor der Zugabe derjenigen Komponenten, die bei dreistufigem Mischprozess auf der Walze zugegeben werden, vorzugsweise auf Temperaturen < 120°C, vorzugsweise <110°C abgekühlt wird.

**18.** Verfahren zur Herstellung von Vulkanisaten, **dadurch gekennzeichnet, dass** man vulkanisierbare Kautschukmischungen nach einem der Ansprüche 1 bis 15 einer Vernetzungsreaktion unterwirft, bevorzugt bei einer Temperatur im Bereich von 100 bis 250°C, insbesondere von 130 bis 180°C, unter einem Druck im Bereich von 1 bis 100 bar.

**19.** Verfahren nach Anspruch 17, **dadurch gekennzeichnet, dass** die Vernetzung im Rahmen eines Formgebungsprozesses stattfindet.

**20.** Vulkanisate erhältlich durch das Verfahren nach Anspruch 17 oder 18.

**21.** Verwendung von vulkanisierbaren Mischungen nach einem der Ansprüche 1 bis 15 zur Herstellung von Reifen und Reifenbauteilen, insbesondere Reifenlaufflächen, Subtreads, Karkassen, Seitenwänden, verstärkten Seitenwänden für Notlaufreifen und Apexmischungen sowie für die Herstellung von technischen Gummiartikeln, bevorzugt Dämpfungselementen, Walzenbelägen, Belägen von Förderbändern, Riemen, Spinnkopsen, Dichtungen, Golfballkernen und Schuhsohlen.

**22.** Dithiophosphorsäuresalz eines bi- oder polycyclischen Amins, bevorzugt der allgemeinen Formel (I) oder (II), 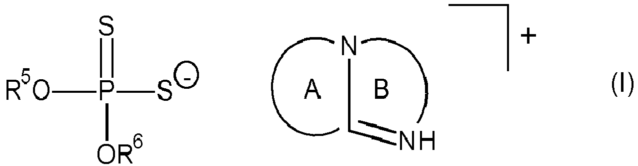 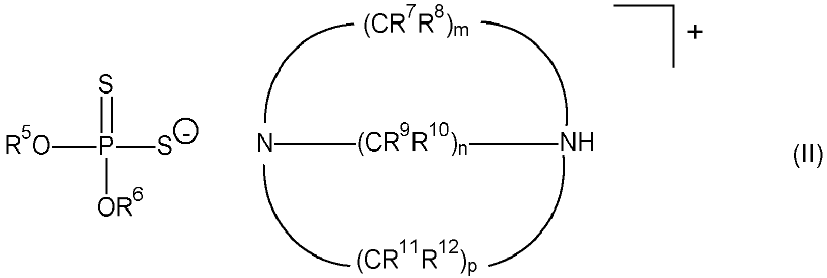 worin
R⁵ und R⁶ gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
A für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten 5 bis 7 gliedrigen heterocyclischen Ring, der 1 oder 2 N-Atome und aufweist;
B für einen aliphatischen, unsubstituierten oder substituierten, gegebenenfalls eine Doppelbindung aufweisenden, 4 bis 8 gliedrigen heterocyclischen Ring steht, bevorzugt für einen unsubstituierten, eine Doppelbindung aufweisenden, 5 bis 6 gliedrigen heterocyclischen Ring, der 2 N-Atome aufweist;
R⁷, R⁸, R⁹, R¹⁰, R¹¹ und R¹² gleich oder verschieden sind und für H oder aliphatische Reste mit 1 bis 4 Kohlenstoffatomen stehen, bevorzugt H, und
m, n und p gleich oder verschieden sind und 1, 2, 3 oder 4, bevorzugt 1 oder 2, besonders bevorzugt 2 bedeuten.

**23.** Verwendung von Dithiophosphorsäuresalzen von bi- oder polycyclischen Aminen als Vulkanisationsbeschleuniger in Kautschukmischungen enthaltend mindestens einen doppelbindungshaltigen Kautschuk.
